(19) Europäisches Patentamt
European Patent Office
Office européen des brevets

(11) EP 4 360 976 B1

(12) **EUROPEAN PATENT SPECIFICATION**

(45) Date of publication and mention of the grant of the patent:
**09.09.2026 Bulletin 2026/37**

(21) Application number: **21951305.8**

(22) Date of filing: **29.07.2021**

(51) International Patent Classification (IPC):
***B60W 30/095*** *(2012.01)* ***B60W 30/18*** *(2012.01)*
***B60K 35/00*** *(2024.01)* ***B60W 60/00*** *(2020.01)*

(52) Cooperative Patent Classification (CPC):
**B60W 30/18159; B60W 60/0011; B60W 60/0027;**
B60K 2360/175; B60W 2050/0025

(86) International application number:
**PCT/CN2021/109331**

(87) International publication number:
**WO 2023/004698 (02.02.2023 Gazette 2023/05)**

(54) **METHOD FOR INTELLIGENT DRIVING DECISION-MAKING, VEHICLE MOVEMENT CONTROL METHOD, APPARATUS, AND VEHICLE**

VERFAHREN ZUR INTELLIGENTEN FAHRENTSCHEIDUNG, FAHRZEUGBEWEGUNGSSTEUERUNGSVERFAHREN, VORRICHTUNG UND FAHRZEUG

PROCÉDÉ DE PRISE DE DÉCISION DE CONDUITE INTELLIGENTE, PROCÉDÉ DE COMMANDE DE MOUVEMENT DE VÉHICULE, APPAREIL ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2024 Bulletin 2024/18**

(73) Proprietor: **Yinwang Intelligent Technologies Co., Ltd.**
**Shenzhen, Guangdong 518129 (CN)**

(72) Inventors:
- **DAI, Zhengchen**
  **Shenzhen, Guangdong 518129 (CN)**
- **WANG, Zhitao**
  **Shenzhen, Guangdong 518129 (CN)**
- **YANG, Shaoyu**
  **Shenzhen, Guangdong 518129 (CN)**
- **WANG, Xinyu**
  **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**EP-A1- 3 539 837**
**CN-A- 108 595 823**
**CN-A- 110 362 910**
**CN-A- 111 267 846**
**CN-A- 112 907 967**
**CN-A- 113 160 547**
**DE-A1- 102018 121 274**
**US-A1- 2016 144 838**
**US-A1- 2021 122 373**
**US-A1- 2021 146 922**
**US-A1- 2021 197 853**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

This application relates to intelligent driving technologies, and in particular, to an intelligent driving decision-making method, a vehicle traveling control method and apparatus, and a vehicle.

### BACKGROUND

With development of artificial intelligence technologies, autonomous driving technologies are gradually being widely applied, thereby reducing driving burden of a driver. For autonomous driving, for example, the Society of Automotive Engineers International (SAE International, or referred to as the Society of Automotive Engineers) provides five levels, namely, L1 to L5 level. The L1 level indicates driver assistance, to help the driver complete some driving tasks and only complete one driving operation. The L2 level indicates partial automation, to automatically perform acceleration, deceleration, and steering operations at the same time. The L3 level indicates conditional automation. A vehicle may automatically accelerate, decelerate, and steer in a specific environment without an operation of the driver. The L4 level indicates high automation. The vehicle may be driven without a driver, but there are restrictions. For example, a vehicle speed cannot exceed a specific value and a driving area is relatively fixed. The L5 level indicates full automation and fully adaptive driving, which is applicable to all driving scenarios. A higher level indicates a more advanced autonomous driving function.

Currently, an automatic driving technology that is at a level above the L2 level and that requires a human driver to drive as appropriate is usually considered as intelligent driving. When the vehicle is in intelligent driving, the vehicle needs to be capable of perceiving a surrounding obstacle in a timely and accurate manner, for example, an oncoming vehicle, a crossing vehicle, a stationary vehicle, a pedestrian, or the like, and making a decision about a traveling behavior and a traveling trajectory of the vehicle, for example, performing acceleration, deceleration, lane change, and the like. US 2021146922 A1 discloses method and a device for a cooperative coordination of future driving maneuvers of a vehicle with fellow maneuvers of at least one fellow vehicle.

### SUMMARY

This application provides an intelligent driving decision-making method, a vehicle traveling control method and apparatus, a vehicle, and the like. This may consume as little computing power as possible to implement traveling decision-making of the vehicle while ensuring decision-making precision.

A first aspect of this application provides an intelligent driving decision-making method, including: obtaining a game object of an ego vehicle, comprising obtaining ego vehicle external environment information, wherein the vehicle external environment information comprises at least one obstacle, and identifying a game object of an ego vehicle from an obstacle of the at least one obstacle, wherein an attention value is allocated to each obstacle of the at least one obstacle by the ego vehicle, where an obstacle that has an intention conflict or a trajectory conflict with the ego vehicle is allocated a higher attention value, and wherein an obstacle is identified as a game object if an attention value of said obstacle passes a threshold; and from a plurality of strategy spaces of the ego vehicle and the game object, performing a plurality of times of release of the plurality of strategy spaces; and after performing one of the plurality of times of release, determining a strategy feasible region of the ego vehicle and the game object based on each released strategy space, and determining a traveling decision-making result of the ego vehicle based on the strategy feasible region; wherein: a strategy space is a multi-dimensional space that encompasses possible strategies that the ego vehicle and the game object can adopt in a given traffic scenario; a strategy feasible region is a subset of strategies that are considered feasible; and releasing a strategy space refers to exploring and evaluating different strategies of a strategy space to determine feasibility.

The strategy feasible region of the ego vehicle and a non-game object includes an executable behavior action of the ego vehicle relative to the non-game object. As described above, by releasing the plurality of strategy spaces for the plurality of times, while decision-making precision (the decision-making precision may be, for example, an execution probability of a decision-making result) is ensured, the strategy feasible region is obtained when as fewer strategy spaces are released as possible. In this way, a behavior-action pair is selected from the strategy feasible region as a decision-making result, thereby minimizing an operation and a quantity of times of releasing strategy spaces, and lowering a requirement for hardware computing power.

In a possible implementation of the first aspect, a dimension of the plurality of strategy spaces includes at least one of the following: a longitudinal sampling dimension, a lateral sampling dimension, or a temporal sampling dimension.

As described above, the plurality of strategy spaces are spanned based on the longitudinal sampling dimension, the lateral sampling dimension, or the temporal sampling dimension. The plurality of strategy spaces include a longitudinal sampling strategy space spanned by a longitudinal sampling dimension of the ego vehicle and/or the game object, a lateral

sampling strategy space spanned by a lateral sampling dimension of the ego vehicle and/or the game object, a temporal dimension strategy space spanned by the ego vehicle and/or the game object in a temporal sampling dimension, or a strategy space formed by any combination of two or three of the longitudinal sampling dimension, the lateral sampling dimension, or the temporal sampling dimension. The temporal dimension strategy space corresponds to strategy spaces respectively spanned in a plurality of single-frame derivations included in one-step decision-making. In each single-frame derivation, the spanned strategy space may include a longitudinal sampling strategy space and/or a lateral sampling strategy space.

As described above, a corresponding strategy space may be spanned in at least one sampling dimension based on a traffic scenario, and the strategy space may be released.

In a possible implementation of the first aspect, the performing a plurality of times of release of a plurality of strategy spaces includes performing the release in a sequence of the following dimensions: the longitudinal sampling dimension, the lateral sampling dimension, and the temporal sampling dimension.

As described above, in a sequence of releasing the longitudinal sampling dimension, releasing the lateral sampling dimension, and releasing the temporal sampling dimension, the strategy spaces released for the plurality of times may include the following strategy spaces:

a longitudinal sampling strategy space spanned by a group of values of a longitudinal sampling dimension of the ego vehicle; a longitudinal sampling strategy space spanned by another group of values of a longitudinal sampling dimension of the ego vehicle; a longitudinal sampling strategy space spanned by both a group of values of a longitudinal sampling dimension of the ego vehicle and a group of values of a longitudinal sampling dimension of the game object; a longitudinal sampling strategy space spanned by both another group of values of a longitudinal sampling dimension of the ego vehicle and a group of values of a longitudinal sampling dimension of the game object; a longitudinal sampling strategy space spanned by both another group of values of a longitudinal sampling dimension of the ego vehicle and another group of values of a longitudinal sampling dimension of the game object; a strategy space spanned, by both a lateral sampling strategy space spanned by a group of values of a lateral sampling dimension of the ego vehicle, and a longitudinal sampling strategy space spanned by the longitudinal sampling dimension of the ego vehicle and/or the longitudinal sampling dimension of the game object; a strategy space spanned, by both a lateral sampling strategy space spanned by another group of values of a lateral sampling dimension of the ego vehicle, and a longitudinal sampling strategy space spanned by the longitudinal sampling dimension of the ego vehicle and/or the longitudinal sampling dimension of the game object; a strategy space spanned, by both a lateral sampling strategy space spanned by both a group of values of a lateral sampling dimension of the ego vehicle and a group of values of a lateral dimension of the game object, and a longitudinal sampling strategy space spanned by the longitudinal sampling dimension of the ego vehicle and/or the longitudinal sampling dimension of the game object; a strategy space spanned, by both a lateral sampling strategy space spanned by both another group of values of a lateral sampling dimension of the ego vehicle and a group of values of a lateral sampling dimension of the game object, and a longitudinal sampling strategy space spanned by the longitudinal sampling dimension of the ego vehicle and/or the longitudinal sampling dimension of the game object; and a strategy space spanned, by both a lateral sampling strategy space spanned by both another group of values of a lateral sampling dimension of the ego vehicle and another group of values of a lateral sampling dimension of the game object, and a longitudinal sampling strategy space spanned by the longitudinal sampling dimension of the ego vehicle and/or the longitudinal sampling dimension of the game object. In addition, after the strategy feasible region of the ego vehicle and the game object is determined based on each released strategy space and the traveling decision-making result of the ego vehicle is determined based on the strategy feasible region, released temporal dimension strategy spaces include the strategy spaces respectively spanned in the plurality of single-frame derivations included in the one-step decision-making. In each single-frame derivation, the spanned strategy spaces may include the longitudinal sampling strategy spaces, the lateral sampling strategy spaces, and the strategy spaces spanned by both the longitudinal sampling strategy spaces and the lateral sampling strategy spaces.

As described above, the plurality of strategy spaces are released in sequence. That is, an acceleration of the vehicle is first changed longitudinally, and then an offset of the vehicle is adjusted laterally. This better complies with a driving habit of the vehicle, and better meets a driving safety requirement. Finally, a decision-making result with better time consistency may be further determined from a plurality of feasible regions based on the derivation of a plurality of frames released in a temporal dimension.

In a possible implementation of the first aspect, when the strategy feasible region of the ego vehicle and the game object is determined, a total cost value of a behavior-action pair in the strategy feasible region is determined based on one or more of the following: a safety cost value, a right-of-way cost value, a lateral offset cost value, a passability cost value, a comfort cost value, an inter-frame association cost value, and a risk area cost value of the ego vehicle or the game object.

As described above, one or more cost values may be selected as required to calculate the total cost value, and the total cost value is used to determine a feasible region.

In a possible implementation of the first aspect, when the total cost value of the behavior-action pair is determined based on two or more cost values, each of the cost values has a different weight.

As described above, different weight values may focus on traveling safety, right-of-way, passability, comfort, risk, and the like. Each weight value is flexibly set to increase flexibility of intelligent driving decision-making. In some possible implementations, the weight values may be allocated in the following sequence: a safety weight > a right-of-way weight > a lateral offset weight > a passability weight > a comfort weight > a risk area weight > an inter-frame association weight.

In a possible implementation of the first aspect, when there are two or more game objects, the traveling decision-making result of the ego vehicle is determined based on each strategy feasible region of the ego vehicle and each game object.

As described above, when there are a plurality of game objects, each strategy feasible region is obtained separately and then a final strategy feasible region is determined based on an intersection of each strategy feasible region. The intersection herein means a behavior action that includes a same action of the ego vehicle.

In a possible implementation of the first aspect, the method further includes: obtaining a non-game object of the ego vehicle; determining a strategy feasible region of the ego vehicle and the non-game object, where the strategy feasible region of the ego vehicle and the non-game object includes an executable behavior action of the ego vehicle relative to the non-game object; and determining the traveling decision-making result of the ego vehicle based on at least the strategy feasible region of the ego vehicle and the non-game object.

As described above, when there is a non-game object, the finally obtained decision-making result is related to the non-game object.

In a possible implementation of the first aspect, a strategy feasible region of the traveling decision-making result of the ego vehicle is determined based on an intersection of each strategy feasible region of the ego vehicle and each game object; or a strategy feasible region of the traveling decision-making result of the ego vehicle is determined based on an intersection of each strategy feasible region of the ego vehicle and each game object and each strategy feasible region of the ego vehicle and each non-game object.

As described above, when there are a plurality of game objects and an ego vehicle, a traveling decision-making result of the ego vehicle and a final strategy feasible region may be obtained based on an intersection of each strategy feasible region of the ego vehicle and the plurality of game objects. When there are a plurality of game objects, a plurality of non-game objects, and an ego vehicle, the traveling decision-making result of the ego vehicle and a final strategy feasible region may be obtained based on an intersection of each strategy feasible region of the ego vehicle, the plurality of game objects, and the plurality of non-game objects.

In a possible implementation of the first aspect, the method further includes: obtaining the non-game object of the ego vehicle; and based on a motion status of the non-game object, constraining a longitudinal sampling strategy space corresponding to the ego vehicle, or constraining a lateral sampling strategy space corresponding to the ego vehicle.

As described above, the longitudinal sampling strategy space corresponding to the ego vehicle is constrained. That is, a value range of the longitudinal sampling dimension that is of the ego vehicle and that is used when the longitudinal sampling strategy space is spanned is constrained. The lateral sampling strategy space corresponding to the ego vehicle is constrained. That is, a value range of the lateral sampling dimension that is of the ego vehicle and that is used when the lateral sampling strategy space is spanned is constrained.

As described above, based on the motion status of the non-game object, such as a position, a speed, or the like, a value range of a longitudinal acceleration or a value range of a lateral offset of the ego vehicle in the spanned strategy space may be constrained. This reduces a quantity of behavior actions in the strategy space and further reduces an operation amount.

In a possible implementation of the first aspect, the method further includes: obtaining a non-game object of the game object of the ego vehicle; and based on a motion status of the non-game object, constraining a longitudinal sampling strategy space corresponding to the game object of the ego vehicle, or constraining a lateral sampling strategy space corresponding to the game object of the ego vehicle.

As described above, the longitudinal sampling strategy space corresponding to the game object of the ego vehicle is constrained. That is, a value range of the longitudinal sampling dimension that corresponds to the game object of the ego vehicle and that is used when the longitudinal sampling strategy space is spanned is constrained. The lateral sampling strategy space corresponding to the game object of the ego vehicle is constrained. That is, a value range of the lateral sampling dimension that is of the game object of the ego vehicle and that is used when the lateral sampling strategy space is spanned is constrained.

As described above, based on the motion status of the non-game object, such as a position, a speed, or the like, a value range of a longitudinal acceleration or a value range of a lateral offset of the game object of the ego vehicle in the spanned strategy space may be constrained. This reduces a quantity of behavior actions in the strategy space and further reduces an operation amount.

In a possible implementation of the first aspect, when the intersection is an empty set, a conservative traveling decision of the ego vehicle is performed. The conservative decision includes an action of making the ego vehicle safely stop or an action of making the ego vehicle safely decelerate for traveling.

As described above, when the strategy feasible region of the ego vehicle is null, the vehicle may travel safely.

In a possible implementation of the first aspect, a non-game object is determined by one or more attention values.

As described above, the game object and the non-game object may be determined based on attention allocated by each obstacle to the ego vehicle. The attention may be implemented according to an algorithm, or may be implemented through inference of a neural network.

In a possible implementation of the first aspect, the method further includes: displaying at least one of the following through a human-computer interaction interface: the traveling decision-making result of the ego vehicle, the strategy feasible region of the decision-making result, a traveling trajectory of the ego vehicle corresponding to the traveling decision-making result of the ego vehicle, or a traveling trajectory of the game object corresponding to the traveling decision-making result of the ego vehicle.

As described above, the traveling decision-making result corresponding to the ego vehicle or a game may be displayed in rich content on the human-computer interaction interface, and interaction with a user is more friendly.

A second aspect of this application provides an intelligent driving decision-making apparatus, including: an obtaining module, configured to obtain a game object of an ego vehicle, comprising: obtaining (S11) ego vehicle external environment information, wherein the vehicle external environment information comprises at least one obstacle, and identifying (S12) a game object of an ego vehicle from an obstacle of the at least one obstacle, wherein an attention value is allocated to each obstacle of the at least one obstacle by the ego vehicle, where an obstacle that has an intention conflict or a trajectory conflict with the ego vehicle is allocated a higher attention value, and wherein an obstacle is identified as a game object if an attention value of said obstacle passes a threshold; and a processing module, configured to: from a plurality of strategy spaces of the ego vehicle and the game object, perform a plurality of times of release of the plurality of strategy spaces; and after performing one of the plurality of times of release, determine a strategy feasible region of the ego vehicle and the game object based on each released strategy space, and determine a traveling decision-making result of the ego vehicle based on the strategy feasible region; wherein: a strategy space is a multi-dimensional space that encompasses possible strategies that the ego vehicle and the game object can adopt in a given traffic scenario; a strategy feasible region is a subset of strategies that are considered feasible; and releasing a strategy space refers to exploring and evaluating different strategies of a strategy space to determine feasibility.

In a possible implementation of the second aspect, a dimension of the plurality of strategy spaces includes at least one of the following: a longitudinal sampling dimension, a lateral sampling dimension, or a temporal sampling dimension.

In a possible implementation of the second aspect, the performing a plurality of times of release of a plurality of strategy spaces includes performing the release in a sequence of the following dimensions: the longitudinal sampling dimension, the lateral sampling dimension, and the temporal sampling dimension.

In a possible implementation of the second aspect, when the strategy feasible region of the ego vehicle and the game object is determined, a total cost value of a behavior-action pair in the strategy feasible region is determined based on one or more of the following: a safety cost value, a right-of-way cost value, a lateral offset cost value, a passability cost value, a comfort cost value, an inter-frame association cost value, and a risk area cost value of the ego vehicle or the game object.

In a possible implementation of the second aspect, when the total cost value of the behavior-action pair is determined based on two or more cost values, each of the cost values has a different weight.

In a possible implementation of the second aspect, when there are two or more game objects, the traveling decision-making result of the ego vehicle is determined based on each strategy feasible region of the ego vehicle and each game object.

In a possible implementation of the second aspect, the obtaining module is further configured to obtain a non-game object of the ego vehicle. The processing module is further configured to: determine a strategy feasible region of the ego vehicle and the non-game object, where the strategy feasible region of the ego vehicle and the non-game object includes an executable behavior action of the ego vehicle relative to the non-game object; and determine the traveling decision-making result of the ego vehicle based on at least the strategy feasible region of the ego vehicle and the non-game object.

In a possible implementation of the second aspect, the processing module is further configured to: determine a strategy feasible region of the traveling decision-making result of the ego vehicle based on an intersection of each strategy feasible region of the ego vehicle and each game object; or determine a strategy feasible region of the traveling decision-making result of the ego vehicle based on an intersection of each strategy feasible region of the ego vehicle and each game object and each strategy feasible region of the ego vehicle and each non-game object.

In a possible implementation of the second aspect, the obtaining module is further configured to obtain the non-game object of the ego vehicle; and the processing module is further configured to: based on a motion status of the non-game object, constrain a longitudinal sampling strategy space corresponding to the ego vehicle, or constrain a lateral sampling strategy space corresponding to the ego vehicle.

In a possible implementation of the second aspect, the obtaining module is further configured to obtain a non-game object of the game object of the ego vehicle; and the processing module is further configured to: based on a motion

status of the non-game object, constrain a longitudinal sampling strategy space corresponding to the game object of the ego vehicle, or constrain a lateral sampling strategy space corresponding to the game object of the ego vehicle.

In a possible implementation of the second aspect, when the intersection is an empty set, a conservative traveling decision of the ego vehicle is performed. The conservative decision includes an action of making the ego vehicle safely stop or an action of making the ego vehicle safely decelerate for traveling.

In a possible implementation of the second aspect, a non-game object is determined by one or more attention values.

In a possible implementation of the second aspect, the processing module is further configured to display at least one of the following through a human-computer interaction interface: the traveling decision-making result of the ego vehicle, the strategy feasible region of the decision-making result, a traveling trajectory of the ego vehicle corresponding to the traveling decision-making result of the ego vehicle, or a traveling trajectory of the game object corresponding to the traveling decision-making result of the ego vehicle.

A third aspect of this application provides a vehicle traveling control method, including: obtaining an obstacle outside a vehicle; for the obstacle, determining a traveling decision-making result of the vehicle according to any method in the first aspect; and controlling traveling of the vehicle based on the decision-making result.

A fourth aspect of this application provides a vehicle traveling control apparatus, including: an obtaining module, configured to obtain an obstacle outside a vehicle; and a processing module, configured to: for the obstacle, determine a traveling decision-making result of the vehicle according to any method in the first aspect, where the processing module is further configured to control traveling of the vehicle based on the decision-making result.

A fifth aspect of this application provides a vehicle, including the vehicle traveling control apparatus in the fourth aspect and a traveling system. The vehicle traveling control apparatus controls the traveling system.

A sixth aspect of this application provides a computing device, including a processor and a memory. The memory stores program instructions. When the program instructions are executed by the processor, the processor is enabled to implement any intelligent driving decision-making method in the first aspect, or when the program instructions are executed by the processor, the processor is enabled to implement the vehicle traveling control method in the third aspect.

A seventh aspect of this application provides a computer-readable storage medium. The computer-readable storage medium stores program instructions. When the program instructions are executed by a processor, the processor is enabled to implement any intelligent driving decision-making method in the first aspect, or when the program instructions are executed by a processor, the processor is enabled to implement the vehicle traveling control method in the third aspect.

These aspects and another aspect of this application will be clearer and easier to understand in descriptions of the following (a plurality of) embodiments.

## BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, same reference numerals represent same content. The accompanying drawings are specifically described below.

FIG. 1 is a schematic diagram of a traffic scenario in which vehicles travel on road surfaces according to an embodiment of this application;
FIG. 2 is a schematic diagram of a vehicle to which an embodiment of this application is applied;
FIG. 3A to FIG. 3E are schematic diagrams of a game object and a non-game object in different traffic scenarios according to an embodiment of this application;
FIG. 4 is a flowchart of an intelligent driving decision-making method according to an embodiment of this application;
FIG. 5 is a flowchart of obtaining a game object in FIG. 4;
FIG. 6 is a flowchart of obtaining a decision-making result in FIG. 4;
FIG. 7 is a schematic diagram of a multi-frame derivation according to an embodiment of this application;
FIG. 8A to FIG. 8F are schematic diagrams of cost functions according to an embodiment of this application;
FIG. 9 is a flowchart of traveling control according to another embodiment of this application;
FIG. 10 is a schematic diagram of a traffic scenario according to an implementation of this application;
FIG. 11 is a flowchart of traveling control according to a specific implementation of this application;
FIG. 12 is a schematic diagram of an intelligent driving decision-making apparatus according to an embodiment of this application;
FIG. 13 is a flowchart of a vehicle traveling control method according to an embodiment of this application;

FIG. 14 is a schematic diagram of a vehicle traveling control apparatus according to an embodiment of this application;
FIG. 15 is a schematic diagram of a vehicle according to an embodiment of this application; and
FIG. 16 is a schematic diagram of a computing device according to an embodiment of this application.

DESCRIPTION OF EMBODIMENTS

The following further describes technical solutions provided in this application with reference to the accompanying drawings and embodiments. It should be understood that system architectures and service scenarios in embodiments of this application are mainly intended to describe possible implementations of the technical solutions of this application, and should not be construed as a unique limitation on the technical solutions of this application. A person of ordinary skill in the art may learn that the technical solutions provided in this application are also applicable to a similar technical problem as a system structure evolves and a new service scenario emerges.

It should be understood that intelligent driving decision-making solutions provided in embodiments of this application include an intelligent driving decision-making method and apparatus, a vehicle traveling control method and apparatus, a vehicle, an electronic apparatus, a computing device, a computer-readable storage medium, and a computer program product. Because problem-resolving principles of the technical solutions are the same or similar, in the following descriptions of specific embodiments, some repeated parts may not be described herein, but it should be considered that the specific embodiments are mutually referenced and may be combined with each other.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are intended to describe the objectives of embodiments of this application, but are not intended to limit this application.

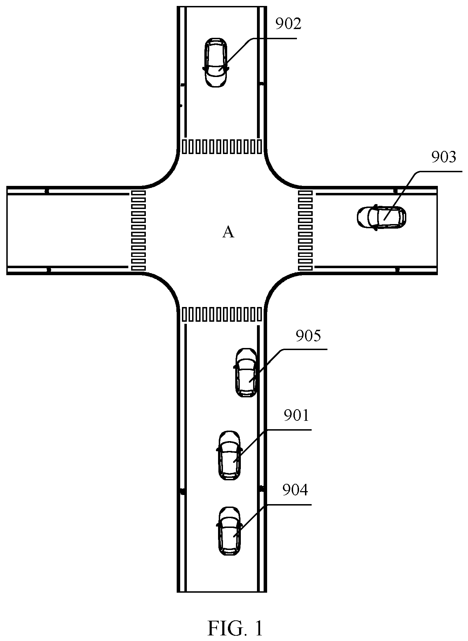

FIG. 1 shows a traffic scenario in which vehicles travel on road surfaces. As shown in FIG. 1, in the traffic scenario, a north-south road and an east-west road form a crossroad A. A first vehicle 901 is located on a south side of the crossroad A, and travels from south to north. A second vehicle 902 is located on a north side of the crossroad A, and travels from north to south. A third vehicle 903 is located on an east side of the crossroad A, and travels from east to south. That is, the third vehicle 903 turns left at the crossroad A and enters the north-south road. There is a fourth vehicle 904 behind the first vehicle 901, and the fourth vehicle 904 also travels from south to north. A fifth vehicle 905 is parked on a side of the north-south road near a south-east corner of the crossroad A. That is, the fifth vehicle 905 is located at a roadside in front of the first vehicle 901. Assume that an intelligent driving function is enabled for the first vehicle 901 at this time. In this case, the first vehicle 901 may detect a current traffic scenario, and may make a decision about a traveling strategy in the current traffic scenario, to control traveling of the vehicle based on a decision-making result, for example, control the vehicle to accelerate, decelerate, or change a lane for traveling based on a determined cutting-in, yielding, or evading policy. An intelligent driving decision-making solution is to make a decision about a traveling strategy based on a game manner. For example, the first vehicle 901 makes a decision, in a game manner, about a traveling strategy of the ego vehicle in a traffic scenario in which the oncoming second vehicle 902 travels. In a complex traffic scenario, it is difficult to make a decision about a traveling strategy in a game manner. For example, in the traffic scenario shown in FIG. 1, for the first vehicle 901, there is the oncoming second vehicle 902, the third vehicle 903 crossing the crossroad A on a side, and the fifth vehicle 905 parked on the roadside in front of the first vehicle 901. When the decision about the traveling strategy is made in the game manner, game objects of the first vehicle 901 are both the second vehicle 902 and the third vehicle 903. Therefore, a multi-dimensional game space needs to be used for game decision-making, for example, a multi-dimensional game space spanned by a lateral traveling dimension and a longitudinal traveling dimension of each of the first vehicle 901, the second vehicle 902, and the third vehicle 903. Use of the multi-dimensional game space will lead to an explosive growth of a quantity of solutions to game decision-making, resulting in a geometric increase in computing burden, which poses a great challenge to existing hardware computing power. Therefore, currently, due to limited hardware computing power, it is difficult to implement productization in an intelligent driving scenario by using a multi-dimensional game space for the game decision-making.

An embodiment of this application provides an improved intelligent driving decision-making solution. When the solution is applied to intelligent vehicle driving, a basic principle of the solution includes: identifying an obstacle in a current traffic scenario for an ego vehicle. The obstacle may include a game object of the ego vehicle and a non-game object of the ego vehicle. For a single game object of the ego vehicle, from a multi-dimensional game space of the ego vehicle and the single game object, strategy spaces spanned by a single sampling dimension or by a plurality of sampling dimensions are released for a plurality of times. In addition, each time a strategy space is released, a solution of the ego vehicle and the single game object of the ego vehicle in the strategy space is searched for. When there is a solution, that is, when there is a game result, that is, when the ego vehicle and the single game object of the ego vehicle have a strategy feasible region in the strategy space, a traveling decision-making result of the ego vehicle is determined based on the game result, and traveling of the vehicle may be further controlled based on the decision-making result. In this case, an unreleased strategy

space may no longer be released from the multi-dimensional game space. For a plurality of game objects of the ego vehicle, as described above, a strategy feasible region of the ego vehicle for each game object may separately be determined. In addition, an action of the ego vehicle is used as an index to obtain a traveling strategy of the ego vehicle from an intersection (the intersection means that a same action of the ego vehicle is included) of strategy feasible regions of the ego vehicle and each game object of the ego vehicle. In the method, while decision-making precision (the decision-making precision may be, for example, an execution probability of a decision-making result) is ensured, an optimal traveling decision may be obtained in the multi-dimensional game space with a minimum quantity of search times, and use of strategy spaces may be minimized as much as possible. Therefore, a requirement for hardware computing power is lowered, and productization on a vehicle is easier.

A subject for implementing the intelligent driving decision-making solution in this embodiment of this application may be an intelligent agent that is powered and is capable of moving autonomously. The intelligent agent may perform game decision-making with another object in a traffic scenario based on the intelligent driving decision-making solution provided in an embodiment of this application, to generate a semantic-level decision-making label and an expected traveling trajectory of the intelligent agent, so that the intelligent agent may perform proper lateral and longitudinal motion planning. For example, the intelligent agent may be a vehicle having an autonomous driving function, a robot that is capable of moving autonomously, or the like. The vehicle herein includes a general motor vehicle, for example, a land transport apparatus including a sedan, a sport utility vehicle (Sport Utility Vehicle, SUV), a multi-purpose vehicle (Multi-purpose Vehicle, MPV), an automated guided vehicle (Automated Guided Vehicle, AGV), a bus, a truck, and another cargo or passenger vehicle, a water surface transport apparatus including various ships and boats, an aircraft, and the like. The motor vehicle further includes a hybrid vehicle, an electric vehicle, a fuel vehicle, a plug-in hybrid electric vehicle, a fuel cell vehicle, and another alternative fuel vehicle. The hybrid vehicle is a vehicle having two or more power sources, and the electric vehicle includes a battery electric vehicle, an extended-range electric vehicle, and the like. In some embodiments, the robot that is capable of moving autonomously may also be one of the vehicles.

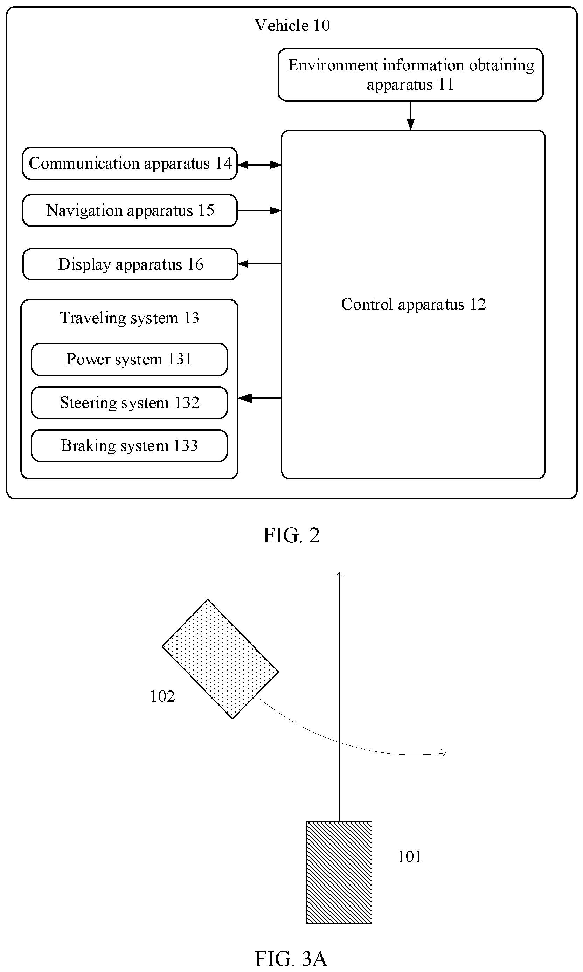

The following describes an example in which the intelligent driving decision-making solution provided in this embodiment of this application is applied to a vehicle. As shown in FIG. 2, when the intelligent driving decision-making solution is applied to the vehicle, the vehicle 10 may include an environment information obtaining apparatus 11, a control apparatus 12, and a traveling system 13, and may further include a communication apparatus 14, a navigation apparatus 15, or a display apparatus 16 in some embodiments.

In this embodiment, the environment information obtaining apparatus 11 may be configured to obtain vehicle's external environment information. In some embodiments, the environment information obtaining apparatus 11 may include one or more of a camera, a laser radar, a millimeter-wave radar, an ultrasonic radar, a global navigation satellite system (Global Navigation Satellite System, GNSS), or the like. The camera may include a conventional RGB (Red Green Blue) camera sensor, an infrared camera sensor, or the like. The obtained vehicle's external environment information includes road surface information and an object on a road surface. The object on the road surface includes a surrounding vehicle, a pedestrian, or the like, and may specifically include motion status information of the vehicle. The motion status information may include a vehicle speed, an acceleration, steering angle information, trajectory information, and the like. In some embodiments, the motion status information of the surrounding vehicle may also be obtained via the communication apparatus 14 of the vehicle 10. The vehicle's external environment information obtained by the environment information obtaining apparatus 11 may be used to form a world model including the road (corresponding to the road surface information), the obstacle (corresponding to the object on the road surface), and the like.

In some other embodiments, the environment information obtaining apparatus 11 may also be an electronic device that receives vehicle's external environment information transmitted by a camera sensor, an infrared night vision camera sensor, a laser radar, a millimeter-wave radar, an ultrasonic radar, or the like, for example, a data transmission chip. The data transmission chip may be, for example, a bus data transceiver chip, a network interface chip, or the like. Alternatively, the data transmission chip may be a wireless transmission chip, for example, a Bluetooth (Blue-tooth) chip, a Wi-Fi chip, or the like. In some other embodiments, the environment information obtaining apparatus 11 may alternatively be integrated into the control apparatus 12, and serve as an interface circuit, a data transmission module, or the like integrated into a processor.

In this embodiment, the control apparatus 12 may be configured to make a decision about an intelligent traveling strategy based on the obtained vehicle's external environment information (including the constructed world model), and generate a decision-making result. For example, the decision-making result may include acceleration, braking, and steering (including a lane change or steering), and may also include an expected traveling trajectory of the vehicle in a short period of time (for example, within a few seconds). In some embodiments, the control apparatus 12 may further generate a corresponding instruction based on the decision-making result to control the traveling system 13, to perform traveling control on the vehicle via the traveling system 13, and control the vehicle to drive as the expected traveling trajectory based on the decision-making result. In embodiments of this application, the control apparatus 12 may be an electronic device, for example, may be a processor of an in-vehicle processing apparatus such as a head unit, a domain controller, a mobile data center (Mobile Data Center, MDC), or an in-vehicle computer, or may be a conventional chip such as a central processing

unit (Central Processing Unit, CPU) or a microprocessor (Micro Control Unit, MCU).

In this embodiment, the traveling system 13 may include a power system 131, a steering system 132, and a braking system 133, which are separately described below.

The power system 131 may include a drive electrical control unit (Electrical Control Unit, ECU) and a drive source. The drive ECU controls a drive force (for example, torque) of the vehicle 10 by controlling the drive source. For example, the drive source may be an engine, a drive motor, or the like. The drive ECU may control the drive source based on an operation performed by a driver on an acceleration pedal, or may control the drive source according to an instruction sent from the control apparatus 12, to control the drive force. The drive force of the drive source is transferred to a wheel via a transmission and the like, to drive the vehicle 10 to travel.

The steering system 132 may include a steering electrical control unit (ECU) and an electric power steering (Electric Power Steering, EPS). The steering ECU may control a motor of the EPS based on an operation performed by the driver on a hand wheel, or may control the motor of the EPS according to an instruction sent from the control apparatus 12, to control an orientation of wheels (specifically, steering wheels). In addition, a torque distribution or a braking force distribution of left and right wheels is changed for performing a steering operation.

The braking system 133 may include a braking electrical control unit (ECU) and a braking mechanism. The braking mechanism makes a braking part work via a brake motor, a hydraulic mechanism, and the like. The braking ECU may control the braking mechanism based on an operation performed by the driver on a braking pedal, or may control the braking mechanism according to an instruction sent from the control apparatus 12, to control the braking force. When the vehicle 10 is an electric vehicle or a hybrid vehicle, the braking system 133 may further include an energy recovery braking mechanism.

In this embodiment, the communication apparatus 14 may be further included. The communication apparatus 14 may exchange data with an external object in a wireless communication manner, to obtain data required by the vehicle 10 for making an intelligent driving decision. In some embodiments, an external object that can be communicated with may include a cloud server, a mobile terminal (such as a mobile phone, a portable computer, or a tablet), a roadside device, a surrounding vehicle, and the like. In some embodiments, the data required for decision-making includes a user profile of a vehicle (that is, another vehicle) around the vehicle 10. The user profile reflects a driving habit of a driver of the another vehicle, and may further include a position of the another vehicle, motion status information of the another vehicle, and the like.

In this embodiment, the navigation apparatus 15 may be further included. The navigation apparatus 15 may include a global navigation satellite system (Global Navigation Satellite System, GNSS) receiver and a map database. The navigation apparatus 15 may determine a location of the vehicle 10 by using a satellite signal received by the GNSS receiver, generate a path to a destination based on map information in the map database, and provide information of the path (including the location of the vehicle 10) to the control apparatus 12. The navigation apparatus 15 may further include an inertial measurement unit (Inertial Measurement Unit, IMU), and perform more accurate positioning of the vehicle 10 based on both information of the GNSS receiver and information of the IMU.

In this embodiment, the display apparatus 16 may be further included. For example, the display apparatus 16 may be a display screen installed at a central control position of a vehicle cockpit, or may be a head-up display (Head-Up Display, HUD) apparatus. In some embodiments, the control apparatus 12 may display a decision-making result in the display apparatus 16 in the vehicle cockpit in a manner that can be understood by a user, for example, in a form of an expected traveling trajectory, an arrow, a text, or the like. In some embodiments, when the expected traveling trajectory is displayed, the expected traveling trajectory may be further displayed in the display apparatus in the vehicle cockpit in a form of a partially enlarged view with reference to a current traffic scenario (for example, a graphical traffic scenario) of the vehicle. The control apparatus 12 may further display information that is of the path to the destination and that is provided by the navigation apparatus 15.

In some embodiments, a voice play system may be further included. In a voice play manner, a user is prompted of a decision-making result determined in the current traffic scenario.

The following describes an intelligent driving decision-making method provided in an embodiment of this application. For ease of description, in this embodiment of this application, an intelligent driving vehicle that is in a traffic scenario and that performs the intelligent driving decision-making method provided in this embodiment of this application is referred to as an ego vehicle. From a perspective of the ego vehicle, another object that affects or may affect traveling of the ego vehicle in the traffic scenario is referred to as an obstacle of the ego vehicle.

In this embodiment of this application, the ego vehicle has a specific behavior decision-making capability, and may generate a traveling strategy, to change a motion status of the ego vehicle. The traveling strategy includes acceleration, braking, and steering (including a lane change or steering). The ego vehicle further has a traveling behavior execution capability, including executing the traveling strategy, and traveling based on a determined expected traveling trajectory.

In some embodiments, the obstacle of the ego vehicle may also have a behavior decision-making capability, to change a motion status of the obstacle. For example, the obstacle may be a vehicle, a pedestrian, or the like that is capable

of moving autonomously. Alternatively, the obstacle of the ego vehicle may not have a behavior decision-making capability, or may not change a motion status of the obstacle. For example, the obstacle may be a vehicle parked on a roadside (the vehicle is not started), a width-limited pier on a road, or the like. In conclusion, the obstacle of the ego vehicle may include a pedestrian, a bicycle, a motor vehicle (such as a motorcycle, a passenger car, a cargo truck, a lorry, or a bus), and the like. The motor vehicle may include an intelligent driving vehicle that may perform the intelligent driving decision-making method.

Based on whether a game interaction relationship is established with the ego vehicle, obstacles of the ego vehicle may be further classified into a game object of the ego vehicle, a non-game object of the ego vehicle, or an irrelevant obstacle of the ego vehicle. Specifically, intensity of interaction of the game object, the non-game object, and the irrelevant obstacle with the ego vehicle gradually weakens from strong interaction to no interaction. It should be understood that in a plurality of traffic scenarios corresponding to different decision-making moments, the game object, the non-game object, and the irrelevant obstacle may mutually change. A position or a motion status of the irrelevant obstacle of the ego vehicle makes the irrelevant obstacle completely irrelevant to a future behavior of the ego vehicle. There is no trajectory conflict or intention conflict between the ego vehicle and the irrelevant obstacle in the future. Therefore, unless otherwise specified, the obstacle in embodiments of this application is the game object of the ego vehicle and the non-game object of the ego vehicle.

The non-game object of the ego vehicle has a trajectory conflict or an intention conflict with the ego vehicle in the future. Therefore, the non-game object of the ego vehicle imposes a constraint on a future behavior of the ego vehicle, but the non-game object of the ego vehicle makes no response to the trajectory conflict or the intention conflict that may exist between the non-game object of the ego vehicle and the ego vehicle in the future. Instead, the ego vehicle needs to unilaterally adjust a motion status of the ego vehicle to resolve the trajectory conflict or the intention conflict that may exist between the ego vehicle and the non-game object in the future. That is, no game interaction relationship is established between the non-game object of the ego vehicle and the ego vehicle. In other words, the non-game object of the ego vehicle is not affected by a traveling behavior of the ego vehicle, remains in a given motion status of the non-game object, and does not adjust the motion status of the non-game object to resolve the trajectory conflict or the intention conflict that may exist between the non-game object and the ego vehicle in the future.

A game interaction relationship is established between the ego vehicle and the game object of the ego vehicle. The game object of the ego vehicle makes a response to a trajectory conflict or an intention conflict that may exist between the game object of the ego vehicle and the ego vehicle in the future. At a moment of starting game decision-making, a trajectory conflict or an intention conflict exists between the game object of the ego vehicle and the ego vehicle. In a game process, the ego vehicle and the game object of the ego vehicle each adjust a motion status, to gradually resolve the trajectory conflict or the intention conflict that may exist between the two while safety is ensured. When a vehicle that is used as the game object of the ego vehicle adjusts a motion status of the vehicle, automatic adjustment may be performed by using an intelligent driving function of the vehicle, or manual driving adjustment may be performed by a driver of the vehicle.

To further understand the game object and the non-game object, the following describes a game object and a non-game object of an ego vehicle by using examples with reference to schematic diagrams of several traffic scenarios in FIG. 3A to FIG. 3E.

As shown in FIG. 3A, an ego vehicle 101 goes straight through an unprotected crossroad. An oncoming vehicle 102 (in left front of the ego vehicle 101) turns left and crosses the unprotected crossroad. In this case, a trajectory conflict or an intention conflict exists between the oncoming vehicle 102 and the ego vehicle 101, and the oncoming vehicle 102 is a game object of the ego vehicle 101.

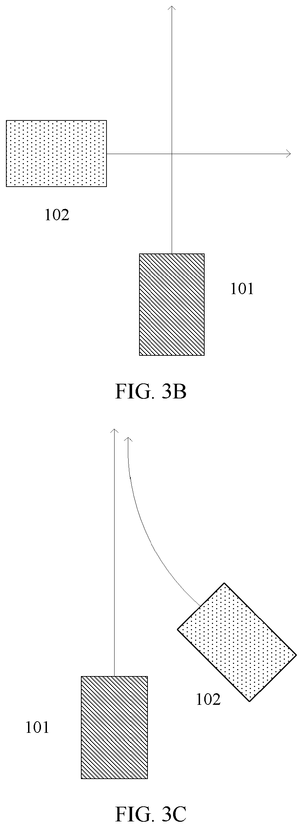

As shown in FIG. 3B, an ego vehicle 101 goes straight. A left-side approaching vehicle 102 crosses a lane of the ego vehicle 101 and passes. In this case, a trajectory conflict or an intention conflict exists between the left-side approaching vehicle 102 and the ego vehicle 101, and the left-side approaching vehicle 102 is a game object of the ego vehicle 101.

As shown in FIG. 3C, an ego vehicle 101 goes straight. A same-direction approaching vehicle 102 (in right front of the ego vehicle 101) enters a lane of the ego vehicle or an adjacent lane of the ego vehicle. In this case, a trajectory conflict or an intention conflict exists between the same-direction approaching vehicle 102 and the ego vehicle 101, a game interaction relationship is established with the ego vehicle 101, and the same-direction approaching vehicle 102 is a game object of the ego vehicle 101.

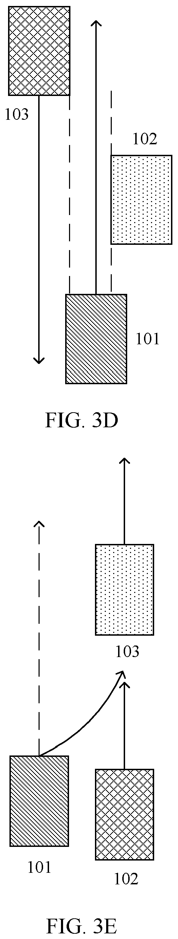

As shown in FIG. 3D, an ego vehicle 101 goes straight, an oncoming vehicle 103 goes straight in a left-side adjacent lane of the ego vehicle 101, and there is a stationary vehicle 102 (in right front of the ego vehicle 101) in a right-side adjacent lane of the ego vehicle 101. In this case, a trajectory conflict or an intention conflict exists between the oncoming vehicle 103 and the ego vehicle 101, a game interaction relationship is established with the ego vehicle 101, and the oncoming vehicle 103 is a game object of the ego vehicle 101. A position of the stationary vehicle 102 conflicts with a trajectory of the ego vehicle 101 in the future. However, it may be determined, based on obtained external environment information, that in an interactive game decision-making process, the stationary vehicle 102 does not switch to a moving

state or even switches to a moving state, but has a higher right-of-way and does not establish a game interaction relationship with the ego vehicle 101. Therefore, the stationary vehicle 102 is a non-game object of the ego vehicle. A traveling behavior and a motion status of the ego vehicle 101 are separately adjusted to resolve the trajectory conflict between the two.

As shown in FIG. 3E, an ego vehicle 101 changes a line from a current lane to the right and enters a right-side adjacent lane. A first straight-through vehicle 103 (in right front of the ego vehicle 101) and a second straight-through vehicle 102 (in right rear of the ego vehicle 101) are in the right-side adjacent lane. Compared with the ego vehicle 101, the first straight-through vehicle 103 has a higher right-of-way, does not establish a game interaction relationship with the ego vehicle 101, and is a non-game object of the ego vehicle 101. The second straight-through vehicle 102 in right rear of the ego vehicle 101 has a trajectory conflict with the ego vehicle 101 in the future and establishes a game interaction relationship with the ego vehicle 101, and the second straight-through vehicle 102 is a game object of the ego vehicle 101.

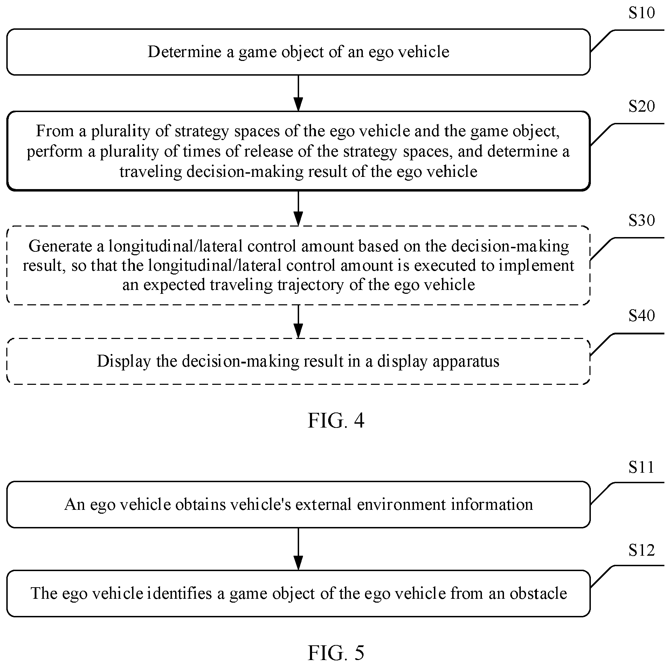

Refer to FIG. 1 and FIG. 2 and refer to the flowchart shown in FIG. 4. The following describes an intelligent driving decision-making method provided in an embodiment of this application. The method includes the following steps.

S10: An ego vehicle obtains a game object of the ego vehicle.

In some embodiments, in the flowchart shown in FIG. 5, this step may include the following sub-steps.

S11: The ego vehicle obtains vehicle's external environment information, where the obtained external environment information includes motion statuses, relative position information, and the like of the ego vehicle and obstacles in a road scenario.

In this embodiment, the ego vehicle may obtain the vehicle's external environment information via an environment information obtaining apparatus of the ego vehicle, such as a camera sensor, an infrared night vision camera sensor, a laser radar, a millimeter-wave radar, an ultrasonic radar, or a GNSS. In some embodiments, the ego vehicle may obtain the vehicle's external environment information through communication with a roadside apparatus or communication with a cloud server via a communication apparatus of the ego vehicle. The roadside apparatus may have a camera or a communication apparatus, and may obtain information of a vehicle around the roadside apparatus. The cloud server may receive and store information reported by each roadside apparatus. In some embodiments, the vehicle's external environment information may be obtained in a combination of the foregoing two manners.

S12: The ego vehicle identifies the game object of the ego vehicle from the obstacles based on the obtained motion statuses of the obstacles, or motion statuses of the obstacles in a period of time, or a formed traveling trajectory of the obstacles, and the relative location information of the obstacles.

In this embodiment, in step S12, a non-game object of the ego vehicle may also be identified from the obstacles, or a non-game object of the game object of the ego vehicle may be identified from the obstacles.

In some embodiments, the game object or the non-game object may be identified according to a preset determining rule. According to the determining rule, for example, if a traveling trajectory or a traveling intention of an obstacle conflicts with a traveling trajectory or a traveling intention of an ego vehicle and the obstacle has a behavior decision-making capability and may change a motion status of the obstacle, the obstacle is a game object of the ego vehicle. If a traveling trajectory or a traveling intention of an obstacle conflicts with a traveling trajectory or a traveling intention of an ego vehicle but a motion status of the obstacle is not actively changed to actively avoid the conflict, the obstacle is a non-game object of the ego vehicle. In some embodiments, the traveling trajectory or the traveling intention of the obstacle may be determined based on a lane (a straight lane or a turning lane) in which the obstacle travels, whether a turn signal is turned on, a vehicle head orientation, and the like.

For example, in FIG. 3A to FIG. 3C, both a crossing obstacle and an obstacle that enters a lane have a large angle intersection with a trajectory of the ego vehicle, therefore have a traveling trajectory conflict, and further are classified as a game vehicle. The oncoming vehicle 103 that passes a narrow lane in FIG. 3D and a rear vehicle 104 in an adjacent lane that the ego vehicle enters in FIG. 3E have an intention conflict, and further are classified as game vehicles. The right-front stationary vehicle 102 that passes a narrow lane in FIG. 3D and the front vehicle 103 in an adjacent lane that the ego vehicle enters in FIG. 3E have a trajectory or intention conflict. However, because the ego vehicle has a lower right-of-way than another vehicle, the another vehicle does not take an action to resolve the conflict. In addition, a behavior of the ego vehicle cannot change a behavior of the another vehicle. In this case, the another vehicle is a non-game vehicle.

In some embodiments, the ego vehicle obtains, according to some known algorithms, obstacle information from vehicle's external environment information perceived or obtained by the ego vehicle, and identifies, from the obstacles, a game object, a non-game object, or a non-game object of the game object of the ego vehicle.

In some embodiments, the foregoing algorithm may be, for example, a classification neural network based on deep learning. Because identifying of a type of an obstacle is equivalent to classification, a decision-making result may be determined after inference is performed by using the classification neural network. The classification neural network may use a convolutional neural network (Convolutional Neural Network, CNN), a recurrent neural network (Recurrent Neural Network, RNN), bidirectional encoder representations from transformers (Bidirectional Encoder Representations from Transformers, BERT), or the like. When the classification neural network is trained, sample data may be used to train the neural network. The sample data may be a picture or a video clip of a vehicle traveling scenario marked with a classification

label. The classification label may include a game object, a non-game object, and a non-game object of the game object.

The foregoing algorithm uses an attention-related algorithm, such as a modeled attention model. The attention model is used to output an attention value allocated by each obstacle to an ego vehicle. The attention value is related to a degree of an intention conflict or a trajectory conflict that exists between the obstacle and the ego vehicle. For example, an obstacle that has an intention conflict or a trajectory conflict with an ego vehicle allocates more attention to the ego vehicle. An obstacle that does not have an intention conflict or a trajectory conflict with an ego vehicle allocates less attention or no attention to the ego vehicle. An obstacle that has a higher right-of-way than an ego vehicle may also allocate less attention or no attention to the ego vehicle. If the obstacle allocates enough attention (for example, higher than a threshold) to the ego vehicle, the obstacle may be identified as a game object of the ego vehicle. If the obstacle allocates much less attention (for example, lower than a threshold) to the ego vehicle, the obstacle may be identified as a non-game object of the ego vehicle.

In some embodiments, the attention model may be constructed by using a mathematical model such as y=softmax (a1x1+a2x2+a3x3, ...), where softmax represents normalization, a1, a2, a3, ... are weight coefficients, and x1, x2, x3, ... are related parameters of the obstacle and the ego vehicle, for example, a longitudinal vehicle distance, a lateral vehicle distance, a vehicle speed difference, a vehicle acceleration difference, and a vehicle position relationship (front, rear, left, right, and the like). In addition, x1, x2, x3, ... may also be normalized values, that is, values between 0 and 1. In some embodiments, the attention model may also be implemented by using a neural network. In this case, an output of the neural network is an attention value allocated by a corresponding identified obstacle to the ego vehicle.

S20: For an interactive game task between the ego vehicle and the game object, from a plurality of strategy spaces of the ego vehicle and the game object, perform a plurality of times of release of the plurality of strategy spaces; and after performing one of the plurality of times of release, determine a strategy feasible region of the ego vehicle and the game object based on each released strategy space, and determine a traveling decision-making result of the ego vehicle based on the strategy feasible region.

In some embodiments, the decision-making result means an executable behavior-action pair of the ego vehicle and the game object in the strategy feasible region. In this case, in step S20, a decision-making process of a single-vehicle interactive game between the ego vehicle and any game object is completed, and the strategy feasible region of the ego vehicle and the game object is determined. In some embodiments, the performing a plurality of times of release of the plurality of strategy spaces includes performing sequential release of each of the strategy spaces. That is, only one strategy space is released each time the release is performed, and the plurality of strategy spaces are released accumulatively after the sequential release is performed. In this case, each strategy space is spanned by at least one sampling dimension.

In some embodiments, based on common vehicle control safety or traveling habits, a manner in which the ego vehicle first accelerates and decelerates in a current lane usually takes precedence over a manner of changing a lane. Therefore, when the plurality of strategy spaces are released, optionally, in a process of releasing the plurality of strategy spaces, the sequential release may be performed in a sequence of the following dimensions: a longitudinal sampling dimension, a lateral sampling dimension, and a temporal sampling dimension. Different dimensions may span different strategy spaces. For example, when the longitudinal sampling dimension is released, a longitudinal sampling strategy space is spanned; when the lateral sampling dimension is released, a lateral sampling strategy space is spanned; a strategy space is spanned by both the lateral sampling strategy space and the longitudinal sampling strategy space that is spanned by the longitudinal sampling dimension; or when the temporal sampling dimension is released, a plurality of strategy spaces formed by a multi-frame derivation are spanned.

In some embodiments, a combination of spaces in each part of different strategy spaces may also be sequentially released. For example, during first release, local spaces of the longitudinal sampling strategy space and local spaces of the lateral sampling strategy space are first sequentially released. During second release, remaining spaces of the longitudinal sampling strategy space and remaining local spaces of the lateral sampling strategy space are sequentially released.

In some embodiments, the plurality of strategy spaces that are released accumulatively may include: a longitudinal sampling strategy space, a lateral sampling strategy space, a strategy space spanned by combining the longitudinal sampling strategy space and the lateral sampling strategy space, a strategy space spanned by combining the longitudinal sampling strategy space and the lateral sampling strategy space each with a temporal sampling dimension, and a strategy space spanned by combining the longitudinal sampling dimension, the lateral sampling dimension, and the temporal sampling dimension.

In some embodiments, as described above, dimensions forming the strategy spaces may include a longitudinal sampling dimension, a lateral sampling dimension, or a temporal sampling dimension. With reference to a vehicle traveling scenario, that is, the dimensions are a longitudinal acceleration dimension, a lateral offset dimension, and a derivation depth corresponding to a plurality of single-frame derivations included in one-step decision-making. Correspondingly, the longitudinal sampling dimension used when the longitudinal sampling strategy space is spanned includes at least one of the following: a longitudinal acceleration of the ego vehicle and a longitudinal acceleration of the game object. The lateral

sampling dimension used when the lateral sampling strategy space is spanned includes at least one of the following: a lateral offset of the ego vehicle and a lateral offset of the game object. The temporal sampling dimension includes a plurality of strategy spaces formed by consecutive multi-frame derivations in corresponding consecutive time points (that is, sequentially increasing a derivation depth). A combination of the three dimensions may form the plurality of strategy spaces.

In this case, a value of each spanned strategy space in each lateral or longitudinal sampling dimension corresponds to a sampling action of the ego vehicle or the game object, that is, a behavior action.

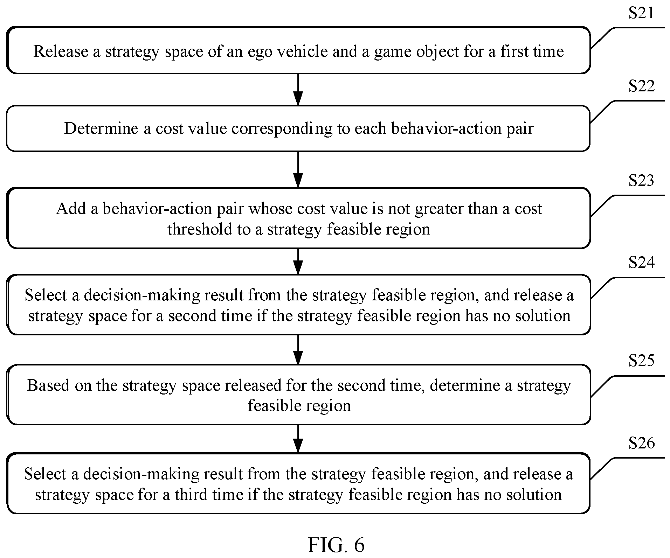

In some embodiments, in the flowchart shown in FIG. 6, step S20 may include the following sub-steps S21 to S26.

S21: Release a strategy space for the first time, release the strategy space of the ego vehicle and the game object, and obtain one by one, based on the released strategy space, a behavior-action pair formed by a plurality of values in at least one sampling dimension of the ego vehicle and a plurality of values in at least one sampling dimension of the game object.

In some embodiments, when the strategy space is released for the first time, a longitudinal sampling dimension is released, including a longitudinal acceleration of the ego vehicle and a longitudinal acceleration of the game object, and the released strategy space spanned by the longitudinal sampling dimension is a longitudinal sampling strategy space. For brevity of description, the strategy space is referred to as a longitudinal sampling strategy space released for the first time below. In this case, the strategy space is a behavior-action pair formed by a to-be-evaluated longitudinal acceleration of the ego vehicle and a longitudinal acceleration of the game object (that is, another vehicle) of the ego vehicle. In this case, a plurality of sampling values may be set in each sampling dimension. Among these sampling values, a plurality of sampling values at a uniform and consecutive sampling interval may form a sampling range. Among these sampling values, a plurality of sampling values scattered in a sampling dimension are discrete sampling points. For example, in a longitudinal acceleration dimension of the ego vehicle, uniform sampling is performed at a pre-determined sampling interval, to obtain a plurality of sampling values in the longitudinal acceleration dimension of the ego vehicle. A quantity of the plurality of sampling values is denoted as M1. That is, there are M1 longitudinal acceleration sampling actions of the ego vehicle. In a longitudinal acceleration dimension of the game object, uniform sampling is performed at a pre-determined sampling interval, to obtain a plurality of sampling values in the longitudinal acceleration dimension of the game object. A quantity of the plurality of sampling values is denoted as N1. That is, there are N1 longitudinal acceleration sampling actions of the game object. Therefore, the longitudinal sampling strategy space released for the first time includes M1*N1 behavior-action pairs that are of the ego vehicle and the game object and that are obtained by combining the longitudinal acceleration sampling actions of the ego vehicle and the longitudinal acceleration sampling actions of the game object. For a specific example of the strategy space, refer to Table 1 or Table 2 below. A first row and a first column in Table 1 or Table 2 are respectively longitudinal acceleration sampling values of an ego vehicle and a game object (that is, another vehicle O in the table). In Table 1, the game object is a crossing game vehicle. In Table 2, the game object is an oncoming game vehicle.

S22: Derive each behavior-action pair in the released strategy space into a traffic sub-scenario currently constructed by the ego vehicle and the game object, to determine a cost value corresponding to each behavior-action pair.

In this case, the ego vehicle and each game object may further separately construct each traffic sub-scenario, and each traffic sub-scenario is a sub-set of a road scenario in which the ego vehicle is located.

In some embodiments, a cost value corresponding to each behavior-action pair in the strategy space is determined based on at least one of the following: a safety cost value, a comfort cost value, a lateral offset cost value, a passability cost value, a right-of-way cost value, a risk area cost value, and an inter-frame association cost value that correspond to the behavior-action pair executed by the ego vehicle and the game object.

In some embodiments, a weighted sum of the foregoing cost values may be used. In this case, to distinguish each cost value, the calculated weighted sum may be referred to as a total cost value. A smaller total cost value indicates more decision-making gains corresponding to the behavior-action pair executed by the ego vehicle and the game object and a higher probability that the behavior-action pair is used as the decision-making result. The foregoing cost values are further described below.

S23: Add a behavior-action pair whose cost value is not greater than a cost threshold to a strategy feasible region of the ego vehicle and the game object, where the strategy feasible region is a game result of the ego vehicle and the game object when the strategy space is released for the first time.

The strategy feasible region means a set of executable behavior-action pairs. For example, table entries whose table content is Cy or Cg in Table 1 below form a strategy feasible region.

S24: When the strategy feasible region (that is, the game result) in a current strategy space is not null, use at least one executable behavior-action pair of the ego vehicle and the game object in the strategy feasible region as a decision-making result of the ego vehicle and the game object, and end the current release of the strategy space.

When the strategy feasible region is null, it indicates that there is no solution in the current strategy space. In this case, a strategy space is released for the second time. That is, a next strategy space in the plurality of strategy spaces is released. In this embodiment, a lateral sampling dimension is released for the second time, a lateral sampling strategy

space is spanned by a lateral offset, and both the lateral sampling strategy space released this time and the longitudinal sampling strategy space released for the first time are used as the current strategy space. In this case, the strategy space currently used for an interactive game of the ego vehicle and the game object is a strategy space spanned by combining the longitudinal sampling strategy space and the lateral sampling strategy space.

The lateral sampling strategy space is spanned in a lateral offset dimension of the ego vehicle and in a lateral offset dimension of the game object. For example, in the lateral offset dimension of the ego vehicle, uniform sampling is performed at a pre-determined sampling interval, to obtain a plurality of sampling values in the lateral offset dimension of the ego vehicle. A quantity of the plurality of sampling values is denoted as Q. That is, there are Q lateral offset sampling actions of the ego vehicle. In the lateral offset dimension of the game object, uniform sampling is performed at a pre-determined sampling interval, to obtain a plurality of sampling values in the lateral offset dimension of the game object. A quantity of the plurality of sampling values is denoted as R. That is, there are R lateral offset sampling actions of the game object.

In this case, in the strategy space currently used for an interactive game of the ego vehicle and the game object, each behavior-action pair of the ego vehicle and the game object is formed by a lateral offset sampling action of the ego vehicle, a lateral offset sampling action of the game object, a longitudinal acceleration sampling action of the ego vehicle, and a longitudinal acceleration sampling action of the game object.

Assume that the current strategy space is formed by Q values of a lateral offset of the ego vehicle, R values of a lateral offset of the game object, M2 values of a longitudinal acceleration of the ego vehicle, and N2 values of a longitudinal acceleration of the game object. The strategy space that is of the ego vehicle and the game object and that is released for the second time includes M2*N2*Q*R behavior-action pairs. For a specific example, refer to Table 3 below. Each table entry in a lateral sampling strategy space in an upper part of Table 3 is associated with a table entry in a longitudinal sampling strategy space in a lower part of Table 3. In a table of the lateral sampling strategy space in the upper part of Table 3, the game object (that is, another vehicle O in the table) is an oncoming game vehicle.

S25: After the strategy space is released for the second time, derive, based on the current strategy space, each released behavior-action pair into a traffic sub-scenario currently constructed by the ego vehicle and the game object, determine a cost value corresponding to each behavior-action pair, and determine a strategy feasible region, to determine a game result. For this step, refer to steps S22 and S23.

S26: When the strategy feasible region (that is, the game result) in step S25 is not null, select a behavior-action pair from the strategy feasible region as a decision-making result, and end the current release of the strategy space.

When the strategy feasible region is null, it indicates that there is no solution in the current strategy space. In this case, a strategy space is released for the third time. That is, a next strategy space in the plurality of strategy spaces is released. In this way, according to the foregoing manner, other strategy spaces may continue to be sequentially released, to continue to determine a game result and a decision-making result.

In some embodiments, for the strategy spaces released for the plurality of times, a strategy space spanned by an $i^{th}$ group of values in the longitudinal acceleration dimension of the ego vehicle and/or the game object and an $i^{th}$ group of values in the lateral offset dimension of the ego vehicle and/or the game object may first be released. In addition, when there is no strategy feasible region in the strategy space, a strategy space spanned by an $(i+1)^{th}$ group of values in the longitudinal acceleration dimension of the ego vehicle and/or the game object and an $(i+1)^{th}$ group of values in the lateral offset dimension of the ego vehicle and/or the game object is then released. That is, the strategy spaces released for the plurality of times change local positions of the ego vehicle and the game object, separately in a game space spanned by all values in the longitudinal acceleration dimension of the ego vehicle and/or the game object and all values in the lateral offset dimension of the ego vehicle and/or the game object, where i is a positive integer. The foregoing uses the $i^{th}$ group of values as an example to show that some values in each sampling dimension are sequentially released, to sequentially search for the strategy feasible region in different local strategy spaces in the game space and determine the decision-making result. In this way, strategy spaces corresponding to different local spaces are sequentially released, an optimal decision-making result may be obtained in a multi-dimensional game space with a minimum quantity of search times, and use of the strategy spaces may be minimized as much as possible, thereby lowering a requirement for hardware computing power.

For example, a strategy space spanned by a lateral offset value 0 of the oncoming game vehicle, a lateral offset value 1 of the ego vehicle, and all longitudinal acceleration values of the ego vehicle and the oncoming game vehicle that are in Table 3 below is first released. In addition, when there is no strategy feasible region in the strategy space, a strategy space spanned by the lateral offset value 0 of the oncoming game vehicle, a lateral offset value 2 or 3 of the ego vehicle, and all longitudinal acceleration values of the ego vehicle and the oncoming game vehicle is then released.

In some embodiments, if the strategy feasible region of the ego vehicle and the game object is still null after the strategy spaces are released for the plurality of times after the foregoing steps, it indicates that there is still no solution. In this case, a conservative traveling decision of the ego vehicle may be performed. The conservative decision includes a behavior action of making the ego vehicle safely brake, a behavior action of making the ego vehicle safely decelerate for traveling, or a prompt or a warning that is provided, so that a driver takes over control of the vehicle.

As described above, after steps S10 to S20 are performed, one single-frame derivation is completed. In some embodiments, after steps S10 to S20 are performed, if the strategy feasible region is not null, the method may further include: performing a plurality of times of release in a temporal sampling dimension and performing a multi-frame derivation based on development of a derivation time (that is, sequentially increasing a derivation depth, which is a plurality of consecutive moments). In this case, after one release is performed at a moment (or referred to as a time point) of a derivation in the plurality of times of release, one single-frame derivation is completed, to determine the strategy feasible region of the ego vehicle and the game object. In addition, when the strategy feasible region that is of the ego vehicle and the game object and that is determined in the single-frame derivation is not null, derived release at a next moment is performed for a single-frame derivation at a next time, until a plurality of times of release in a temporal sampling dimension end or a consecutive multi-frame derivation ends.

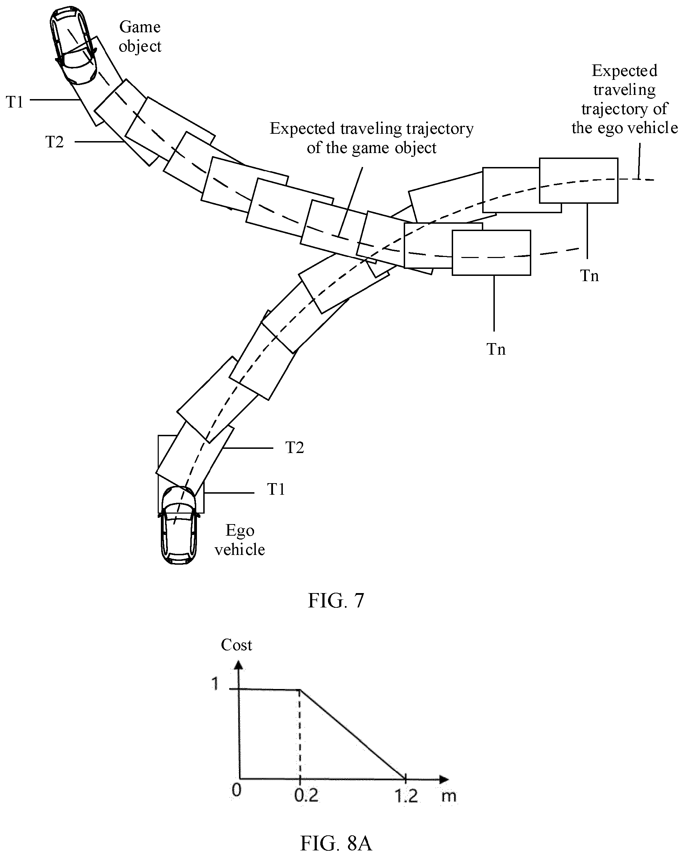

In this case, a plurality of single-frame derivations in one-step decision-making are implemented. As shown in FIG. 7, T1 indicates an initial motion status of the ego vehicle and the game object. T2 indicates a motion status of the ego vehicle and the game object after a first frame is derived, that is, a derivation result of the first frame. Tn indicates a motion status of the ego vehicle and the game object after an $(n-1)^{th}$ frame is derived.

In some embodiments, each time a temporal sampling dimension is released, a derivation time is moved at a preset time interval (for example, 2 seconds or 5 seconds), that is, moved to a next moment (or referred to as a time point). Correspondingly, a derivation result of a current frame is used as an initial derivation condition of a next frame, to derive a motion status of the ego vehicle and the game object at a next moment. In this way, according to this manner, the temporal sampling dimension may continue to be released at a subsequent moment, to continue to derive a plurality of consecutive frames, and continue to determine a game result and a decision-making result.

As described above, during the release of the temporal sampling dimension, a decision-making result needs to be evaluated on behavior decision-making that is of the ego vehicle and the game object and that is determined through a derivation of two adjacent single frames, and an inter-frame association cost value needs to be determined, which is described in detail below. The release of the temporal sampling dimension helps improve behavior consistency of the vehicle. For example, when an intention decision corresponding to the motion status or the decision-making result that is of the ego vehicle and the game object and that is derived in the plurality of consecutive frames is the same or similar, a traveling behavior of an intelligent traveling vehicle that performs the intelligent driving decision-making method is more stable in time domain, fluctuation of a traveling trajectory is smaller, and vehicle traveling is more comfortable.

In the released temporal sampling dimension, that is, at a plurality of consecutive decision-making moments, the plurality of released strategy spaces are separately used to: obtain the strategy feasible region corresponding to the ego vehicle and the game object; and derive a motion status obtained after the ego vehicle and the game object sequentially execute, based on a time sequence, executable behavior-action pairs corresponding to these strategy feasible regions. A long-term derivation is performed on the motion status and/or the expected traveling trajectory of the ego vehicle and the game object, so that time consistency of decision-making results may be ensured.

After the multi-frame derivation ends, if overall gains of the multi-frame derivation meet a decision-making requirement, it may be determined that a game result of each frame gradually converges to a Nash equilibrium (Nash equilibrium) state. In this case, a decision-making result of a first frame in the multi-frame derivation may be used as a traveling decision-making result of the ego vehicle.

In some embodiments, if overall gains of the multi-frame derivation do not meet a decision-making requirement, a decision-making result of a first frame may be re-selected. The decision-making result of the first frame corresponds to the decision-making result of the single-frame derivation. Re-selecting the decision-making result of the first frame is selecting another behavior-action pair from a strategy feasible region of the decision-making result of the first frame as the decision-making result. The multi-frame derivation may be performed again for the re-selected decision-making result, to determine whether the re-selected decision-making result may be used as a final decision-making result.

In some embodiments, when the decision-making result of the first frame is selected for the first time and reselected, or re-selected for a plurality of times, selection may be performed based on a sorting result of a cost value corresponding to each behavior-action pair, and a decision-making result corresponding to a behavior-action pair with a smaller total cost value is preferentially selected.

In some embodiments, the different cost values may have different weights, and may be correspondingly referred to as a safety weight, a comfort weight, a lateral offset weight, a passability weight, a right-of-way weight, a risk area weight, and an inter-frame association weight. In addition, in some embodiments, the weight values may be allocated in the following sequence: a safety weight > a right-of-way weight > a lateral offset weight > a passability weight > a comfort weight > a risk area weight > an inter-frame association weight. In some embodiments, normalization processing may be separately performed on the cost values, and a value range is [0,1].

In some embodiments, the cost values may be obtained through calculation based on different cost functions, which may be correspondingly referred to as a safety cost function, a comfort cost function, a passability cost function, a lateral offset cost function, and a right-of-way cost function.

In some embodiments, the safety cost value may be obtained through calculation based on a safety cost function

that uses a relative distance when an ego vehicle and another vehicle (that is, a game object) interact with each other as an independent variable, and the safety cost value is negatively correlated with the relative distance. For example, a larger relative distance between two vehicles indicates a smaller safety cost value. As shown in FIG. 8A, a safety cost function obtained after normalization processing is a piecewise function as follows, where $C_{dist}$ is a safety cost value, and dist is a relative distance between the ego vehicle and the game object; and for example, the minimum distance is defined as a minimum polygon distance between the ego vehicle and the game object:

$$C_{dist}=\begin{cases} 1, dist\in[0, threLow] \\ \frac{(threHigh-dist)}{(threHigh-threLow)}, dist\in[threLow, threHigh] \\ 0, dist\in[threHigh, \infty] \end{cases}$$

threLow is a lower-limit distance threshold, which is 0.2 in FIG. 8A, and threHigh is an upper-limit distance threshold, which is 1.2 in FIG. 8A. Optionally, the lower-limit distance threshold threLow and the upper-limit distance threshold threHigh may be dynamically adjusted based on a status of interaction between the ego vehicle and the another vehicle, for example, dynamically adjusted based on a relative speed, a relative distance, a relative angle, or the like of the ego vehicle and the another vehicle.

In some embodiments, the safety cost value defined by the safety cost function is positively correlated with the relative speed or the relative angle. For example, when two vehicles meet in an opposite direction or a lateral direction (the lateral direction means that the another vehicle crosses relative to the ego vehicle), a larger relative speed or a larger relative angle of interaction between the two vehicles indicates a larger safety cost value correspondingly.

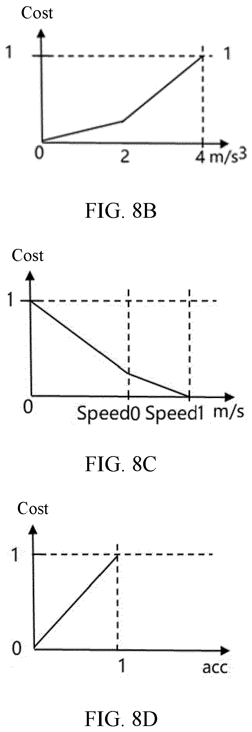

In some embodiments, the comfort cost value of a vehicle (an ego vehicle or a game object) may be obtained through calculation based on a comfort cost function that uses an absolute value of an acceleration change amount (that is, jerk, jerk) as an independent variable. As shown in FIG. 8B, a comfort cost function obtained after normalization processing is a piecewise function as follows, where $C_{comf}$ is a comfort cost value, and jerk is an acceleration change amount of an ego vehicle or a game object:

$$C_{comf}=\begin{cases} 1, jerk\in[threHigh, \infty] \\ \frac{(jerk-C_{middle}\cdot jerk)}{(threHigh-threMiddle)}+\frac{(C_{middle}\cdot threHigh-threMiddle)}{(threHigh-threMiddle)}, \\ jerk\in[threMiddle, threHigh] \\ \frac{C_{middle}}{threMiddle}jerk, jerk\in[0, threMiddle] \end{cases}$$

threMiddle is a jerk middle-point threshold, which is 2 in an example in FIG. 8B, and threHigh is an upper-limit jerk threshold, which is 4 in FIG. 8B. $C_{middle}$ is a cost slope of jerk. That is, a larger acceleration change amount of the vehicle indicates poorer comfort and a larger comfort cost value. In addition, after the acceleration change amount of the vehicle is greater than the middle-point threshold, the comfort cost value increases faster.

In some embodiments, the acceleration change amount of the vehicle may be a longitudinal acceleration change amount, a lateral acceleration change amount, or a weighted sum of both. In some embodiments, the comfort cost value may be a comfort cost value of the ego vehicle, a comfort cost value of the game object, or a weighted sum of the comfort cost values of both.

In some embodiments, the passability cost value may be obtained through calculation based on a passability cost function that uses a speed change amount of the ego vehicle or the game object as an independent variable. For example, a vehicle yields at a relatively large deceleration, resulting in a relatively large speed loss (a difference between a current speed and a future speed, that is, an acceleration) or a relatively long waiting time. In this case, a passability cost value of the vehicle increases. For example, a vehicle cuts in at a relatively large acceleration, resulting in a relatively large speed increase (a difference between a current speed and a future speed, that is, an acceleration) or a relatively short waiting time. In this case, a passability cost value of the vehicle decreases.

In some embodiments, the passability cost value may also be obtained through calculation based on a passability cost function that uses a proportion of a relative speed of the ego vehicle and the game object as an independent variable. For example, before the action pair is executed, an absolute value of a speed of the ego vehicle accounts for a relatively large proportion in a sum of absolute values of speeds of the ego vehicle and the game object, and an absolute value of a speed of the game object accounts for a relatively small proportion in the sum of the absolute values of the speeds of the

ego vehicle and the game object. After the behavior-action pair is executed, if the ego vehicle yields at a relatively large deceleration, a speed loss of the ego vehicle increases and a speed proportion decreases. In this case, a passability cost value corresponding to the behavior-action pair executed by the ego vehicle is relatively large. However, after the behavior-action pair is executed, if the game object cuts in at a relatively large acceleration, a speed of the game object increases and a speed proportion increases. In this case, a passability cost value corresponding to the behavior action executed by the game object is relatively small.

In some embodiments, the passability cost value is a passability cost value of the ego vehicle corresponding to the behavior-action pair executed by the ego vehicle, or a passability cost value of the game object corresponding to the behavior-action pair executed by the game object, or a weighted sum of the passability cost values of both.

In some embodiments, as shown in FIG. 8C, a passability cost function obtained after normalization processing is a piecewise function as follows, where $C_{pass}$ is a passability cost value, and speed is an absolute value of a speed of the vehicle:

$$C_{pass}=\begin{cases} 0, speed \in [speed1, \infty] \\ \dfrac{C_{middle} \cdot (speed - speed1)}{(speed0 - speed1)}, speed \in [speed0, speed1] \\ \dfrac{(C_{middle}-1)}{speed0} speed+1, speed \in [0, speed0] \end{cases}$$

The absolute value of the speed at a middle point of the vehicle is speed0, a maximum value of the absolute value of the speed of the vehicle is speed1, and $C_{middle}$ is a cost slope of the speed. That is, a larger absolute value of the speed of the vehicle indicates better passability and a smaller passability cost value. In addition, after the absolute value of the speed of the vehicle is greater than a middle-point threshold, the passability cost value decreases faster.

In some embodiments, right-of-way information corresponding to the vehicle may be determined based on the obtained user profile of the ego vehicle or the game object. For example, if a driving behavior of the game object is in a radical style and is more likely to make a cutting-in decision, right-of-way is high. If a driving behavior of the game object is in a conservative style and is more likely to adopt a yielding policy, right-of-way is low. A high right-of-way tends to maintain a specified motion status or a specified traveling behavior, and a low right-of-way tends to change the specified motion status or the specified traveling behavior.

In some embodiments, the user profile may be determined based on a gender, an age, or a historical behavior action completion status of a user. In some embodiments, the cloud server may obtain data required for determining the user profile, and determine the user profile. If the behavior-action pair executed by the ego vehicle and/or the game object enables a vehicle with a high right-of-way to change a motion status, a right-of-way cost value corresponding to the behavior-action pair is relatively large, and gains are relatively small.

In some embodiments, based on a behavior decision that causes a change in a motion status of a vehicle with a high right-of-way, a larger right-of-way cost value is determined to increase penalty. In other words, with this feedback mechanism, a behavior-action pair in which the vehicle with the high right-of-way maintains a current motion status has more right-of-way gains, that is, a relatively small right-of-way cost value.

In some embodiments, as shown in FIG. 8D, a right-of-way cost function obtained after normalization processing is a piecewise function as follows, where $C_{roadRight}$ is a right-of-way cost value, and acc is an absolute value of an acceleration of the vehicle:

$$C_{roadRight}=\begin{cases} 1, acc \in [threHigh, \infty] \\ \dfrac{1}{threHigh} acc, acc \in [0, threHigh] \end{cases}$$

threHigh is an upper-limit acceleration threshold, which is 1 in FIG. 8D. That is, a larger acceleration of the vehicle indicates a larger right-of-way cost value.

In other words, the right-of-way cost function enables a behavior action in which the vehicle with the high right-of-way maintains the current motion status to have a relatively small right-of-way cost value, to avoid the behavior-action pair in which the vehicle with the high right-of-way changes the current motion status to be a decision-making result.

In some embodiments, the acceleration of the vehicle may be a longitudinal acceleration or a lateral acceleration. That is, in the lateral offset dimension, a large lateral change also brings a large right-of-way cost value. In some embodiments, the right-of-way cost value may be a right-of-way cost value corresponding to the behavior-action pair executed by the ego vehicle, or a right-of-way cost value corresponding to the behavior-action pair executed by the game

object, or a weighted sum of the right-of-way cost values of both.

In some embodiments, for example, if a vehicle is in a risk area on a road (in the area, the vehicle has a relatively high traveling risk, and needs to leave the risk area as soon as possible), a relatively large risk area cost value needs to be applied in a vehicle yielding strategy to increase penalty. Instead of selecting a vehicle yielding behavior, a vehicle cutting-in behavior is selected as a decision-making result, so that the vehicle leaves the risk area as soon as possible. That is, a decision that the vehicle leaves the risk area as soon as possible is made. This ensures that the vehicle leaves the risk area as soon as possible and does not severely affect traffic.

In other words, with this feedback mechanism in which a larger risk area cost value indicates fewer strategy gains, the vehicle in the risk area on the road does not take the yielding behavior, that is, gives up a behavior decision (the behavior decision has a relatively large risk area cost value) that causes the vehicle in the risk area on the road to take the yielding behavior, and selects a decision-making result (having a relatively small risk area cost value) that enables the vehicle in the risk area on the road to take the cutting-in behavior to leave the risk area as soon as possible. This prevents the vehicle in the risk area on the road from being stranded and from seriously affecting the traffic.

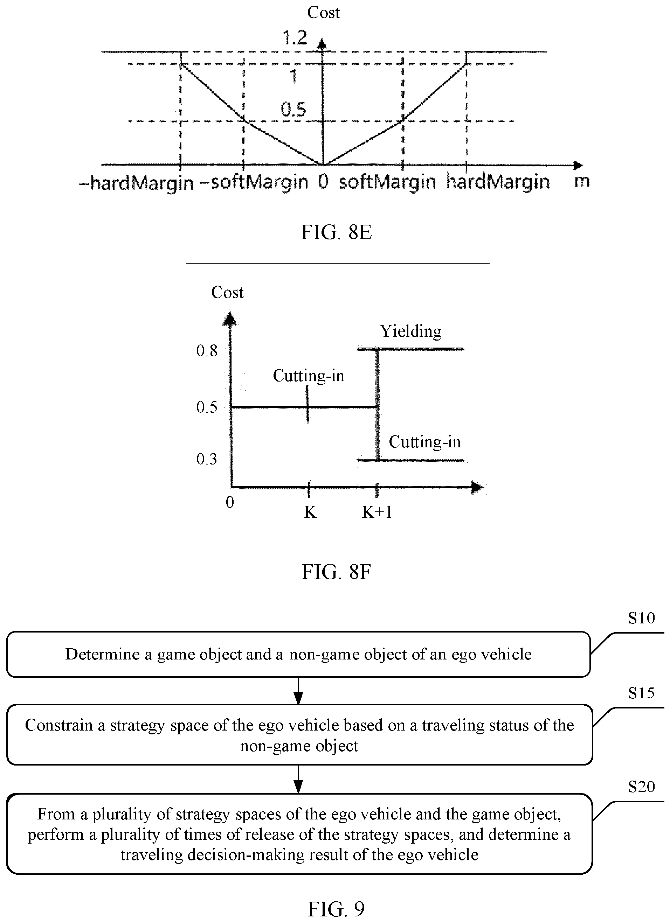

In some embodiments, the risk area cost value may be a risk area cost value corresponding to the behavior-action pair executed by the ego vehicle in a risk area on a road, or a risk area cost value corresponding to the behavior-action pair executed by the game object in a risk area on a road, or a weighted sum of the risk area cost values of both. In some embodiments, the lateral offset cost value may be obtained through calculation based on a lateral offset amount of the ego vehicle or the game object. As shown in FIG. 8E, a lateral offset cost function that is in a right-half space and that is obtained after normalization processing is a piecewise function as follows, where $C_{offset}$ is a lateral offset cost value, offset is a lateral offset amount of the vehicle in a unit of meter; and in this case, an equation expression of a left-half space may be obtained by negating an equation expression of the right-half space of a coordinate plane:

$$C_{offset}=\begin{cases} 1.2, offset \in [threHigh, \infty] \\ \dfrac{(offset - C_{middle} \cdot offset)}{(threHigh - threMiddle)} + \dfrac{(C_{middle} \cdot threHigh - threMiddle)}{(threHigh - threMiddle)}, \\ \quad offset \in [threMiddle, threHigh] \\ \dfrac{C_{middle}}{threMiddle} offset, offset \in [0, threMiddle] \end{cases}$$

threMiddle is a lateral offset intermediate value, for example, a road soft boundary; $C_{middle}$ is a first lateral offset cost slope; and threHigh is an upper-limit lateral offset threshold, for example, a road hard boundary. In other words, a larger lateral offset of the vehicle indicates fewer lateral offset gains and a larger lateral offset cost value. In addition, after a lateral offset amount of the vehicle is greater than the lateral offset intermediate value, the lateral offset cost value increases faster to increase penalty. After the lateral offset amount of the vehicle is greater than the upper-limit lateral offset threshold, for example, the lateral offset cost value is a fixed value 1.2 to increase penalty.

In some embodiments, the lateral offset cost value may be a lateral offset cost value corresponding to the behavior-action pair executed by the ego vehicle, or a lateral offset cost value corresponding to the behavior-action pair executed by the game object, or a weighted sum of the lateral offset cost values of both.

In the foregoing multi-frame derivation steps, a decision-making result needs to be evaluated on behavior decision-making that is of the ego vehicle and the game object and that is determined through the derivation of two adjacent single frames, and an inter-frame association cost value needs to be determined.

In some embodiments, as shown in FIG. 8F, an intention decision of a previous frame K of the ego vehicle is to cut in the game object. When the intention decision of a current frame K+1 of the ego vehicle is to cut in the game object, a corresponding inter-frame association cost value is relatively small, for example, 0.3. However, a default value is 0.5, and therefore this is a reward. However, when the intention decision of the current frame K+1 of the ego vehicle is to yield the game object, a corresponding inter-frame association cost value is relatively large, for example, 0.8. However, a default value is 0.5, and therefore this is penalty. In this case, a strategy that the intention decision of a current frame of the ego vehicle is to cut in the game object is selected as a feasible solution to the current frame. Based on the penalty or the reward for the inter-frame association cost value, it can be ensured that the intention decision of the current frame of the ego vehicle is consistent with an intention decision of a previous frame, so that a motion status of the ego vehicle in the current frame is consistent with the motion status in the previous frame, and behavior decision-making of the ego vehicle is stabilized in time domain.

In some embodiments, the inter-frame association cost value may be obtained through calculation based on an intention decision of the ego vehicle in a previous frame and an intention decision of the ego vehicle in a current frame, or may be obtained through calculation based on an intention decision of the game object in a previous frame and an intention

decision of the game object in a current frame, or may be obtained after weighting is performed based on the ego vehicle and the game object.

In some embodiments, as shown in FIG. 4, after the decision-making result is determined in step S20, the following step S30 and/or S40 may be further included.

S30: The ego vehicle generates a longitudinal/lateral control amount based on the decision-making result, so that a traveling system of the ego vehicle executes the longitudinal/lateral control amount to implement an expected traveling trajectory of the ego vehicle.

In some embodiments, a control apparatus of the ego vehicle generates the longitudinal/lateral control amount based on the decision-making result, and sends the longitudinal/lateral control amount to the traveling system 13, so that the traveling system 13 performs traveling control on the vehicle, including power control, steering control, and braking control. In this way, the vehicle implements the expected traveling trajectory of the ego vehicle based on the decision-making result.

S40: Display the decision-making result in a display apparatus in a manner that can be understood by a user.

The traveling decision-making result of the ego vehicle includes a behavior action of the ego vehicle. Based on the behavior action of the ego vehicle, and the motion status that is of the ego vehicle and that is obtained at a decision-making start moment in a current frame derivation, an intention decision of the ego vehicle may be predicted, for example, cutting-in, yielding, or evading, and an expected traveling trajectory of the ego vehicle may be further predicted. In some embodiments, the decision-making result is displayed in a display apparatus in a vehicle cockpit in a manner that can be understood by a user, for example, in a form of an expected traveling trajectory, an arrow indicating the intention decision, a text indicating the intention decision, or the like. In some embodiments, when the expected traveling trajectory is displayed, the expected traveling trajectory may be displayed in the display apparatus in the vehicle cockpit in a form of a partially enlarged view with reference to a current traffic scenario (for example, a graphical traffic scenario) of the vehicle. In some embodiments, a voice play system may be further included. In a voice play manner, a user may be prompted of an intention decision or a strategy label that is decided.

In some embodiments, considering decision-making of unidirectional interaction between the ego vehicle and the non-game object of the ego vehicle or decision-making of unidirectional interaction between the game object of the ego vehicle and the non-game object of the game object of the ego vehicle, in another embodiment shown in FIG. 9, between step S10 to step S20, the following step may be further included.

S15: Constrain a strategy space of the ego vehicle or the game object based on a motion status of the non-game object.

In some embodiments, a value range in each sampling dimension of the ego vehicle may be constrained based on a motion status of the non-game object of the ego vehicle.

In some embodiments, a value range in each sampling dimension of the game object of the ego vehicle may be constrained based on a motion status of the non-game object of the game object of the ego vehicle.

In some embodiments, the value range may be one or more sampling ranges in a sampling dimension, or may be a plurality of discrete sampling points. The value range after the constraint may be a partial value range.

In some embodiments, step S15 includes: In a process of unidirectional interaction between the ego vehicle and the non-game object of ego vehicle, determine the value range in each sampling dimension of the ego vehicle under the constraint of the motion status of the non-game object; or in a process of unidirectional interaction between the game object of the ego vehicle and the non-game object of the game object of the ego vehicle, determine the value range in each sampling dimension of the game object of the ego vehicle under the constraint of the motion status of the non-game object of the game object of the ego vehicle.

The non-game object does not participate in an interactive game, and the motion status of the non-game object remains unchanged. Therefore, after the value range in each sampling dimension of the ego vehicle is constrained based on the motion status of the game object of the ego vehicle, and the value range in each sampling dimension of the game object of the ego vehicle is constrained based on the motion status of the non-game object of the game object of the ego vehicle, step S20 is performed again. This helps reduce a game space and a strategy space in a decision-making process of a single-vehicle interactive game between the ego vehicle and the game object of the ego vehicle, and reduce computing power used in the decision-making process of the interactive game.

In some embodiments, based on the constraint on the ego vehicle, step S15 may include: first, receive the motion status of the non-game object of the ego vehicle, and observe a feature quantity of the non-game object; and then calculate a conflict area between the ego vehicle and the non-game object, and determine the feature quantity of the ego vehicle, that is, a critical action. As described above, based on a position, a speed, an acceleration, and/or a traveling trajectory of the non-game object, a critical action corresponding to an intention decision made by the ego vehicle, such as evading, cutting-in, or yielding, is calculated, and a feasible interval for the non-game object in each sampling dimension of the ego vehicle is generated, that is, a constrained value range in each sampling dimension of the ego vehicle for the non-game object.

In some embodiments, also based on the constraint on the game object of the ego vehicle, compared with the

foregoing constraint on the ego vehicle, the ego vehicle may be changed to the game object of the ego vehicle, to generate a constrained value range in each sampling dimension of the game object of the ego vehicle for the non-game object.

In some embodiments, when the ego vehicle has a non-game object C: Decision-making of an interactive game between an ego vehicle A and a game object B of the ego vehicle may be first performed, to determine a corresponding strategy feasible region AB; a non-game feasible region AC of the ego vehicle and a non-game object C is introduced; an intersection of the strategy feasible region AB and the non-game feasible region AC is obtained, to obtain a final strategy feasible region ABC; and a traveling decision-making result of the ego vehicle is determined based on the final strategy feasible region.

In some embodiments, when the game object B of the ego vehicle has a non-game object D: Decision-making of the interactive game between the ego vehicle A and the game object B of the ego vehicle may be first performed, to determine the corresponding strategy feasible region AB; a non-game feasible region BD of the game object B of the ego vehicle and the non-game object D of the game object B of the ego vehicle is introduced; an intersection of the strategy feasible region AB and the non-game feasible region BD is obtained, to obtain a final feasible region ABD; and a traveling decision-making result of the ego vehicle is determined based on the final strategy feasible region.

In some embodiments, when the ego vehicle has the non-game object C and the game object B of the ego vehicle has the non-game object D: Decision-making of the interactive game between the ego vehicle A and the game object B of the ego vehicle may be first performed, to determine the corresponding strategy feasible region AB; the non-game feasible region AC of the ego vehicle A and the non-game object C, and the non-game feasible region BD of the game object B of the ego vehicle and the non-game object D of the game object B of the ego vehicle are introduced; an intersection of the strategy feasible region AB, the non-game feasible region AC, and the non-game feasible region BD is obtained, to obtain a final feasible region ABCD; and a traveling decision-making result of the ego vehicle is determined based on the final strategy feasible region.

The foregoing specifically describes the steps of determining the executable behavior-action pair of the ego vehicle and the game object by sequentially releasing the plurality of strategy spaces of the ego vehicle and the single game object. In some embodiments, when the ego vehicle has two or more game objects, for example, two game objects including a first game object and a second game object, the intelligent driving decision-making method provided in this embodiment of this application includes the following steps.

Step 1: From a plurality of strategy spaces of the ego vehicle and the first game object, perform sequential release of the strategy spaces, and determine a strategy feasible region of traveling by the ego vehicle for the first game object. Determining the strategy feasible region of traveling by the ego vehicle for the first game object is similar to step S20. Details are not described herein again.

Step 2: From a plurality of strategy spaces of the ego vehicle and the second game object, perform sequential release of the strategy spaces, and determine a strategy feasible region of traveling by the ego vehicle for the second game object. Determining the strategy feasible region of traveling by the ego vehicle for the second game object is similar to step S20. Details are not described herein again.

Step 3: Determine the traveling decision-making result of the ego vehicle based on each strategy feasible region of the ego vehicle and each game object. In some embodiments, an intersection is obtained based on each strategy feasible region to obtain a final strategy feasible region, and then a decision-making result is determined based on the strategy feasible region. In some embodiments, the decision-making result may be a behavior-action pair with a minimum cost value in the strategy feasible region.

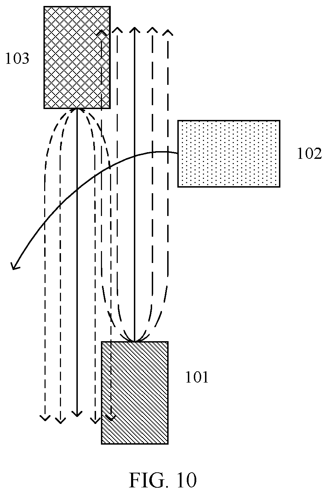

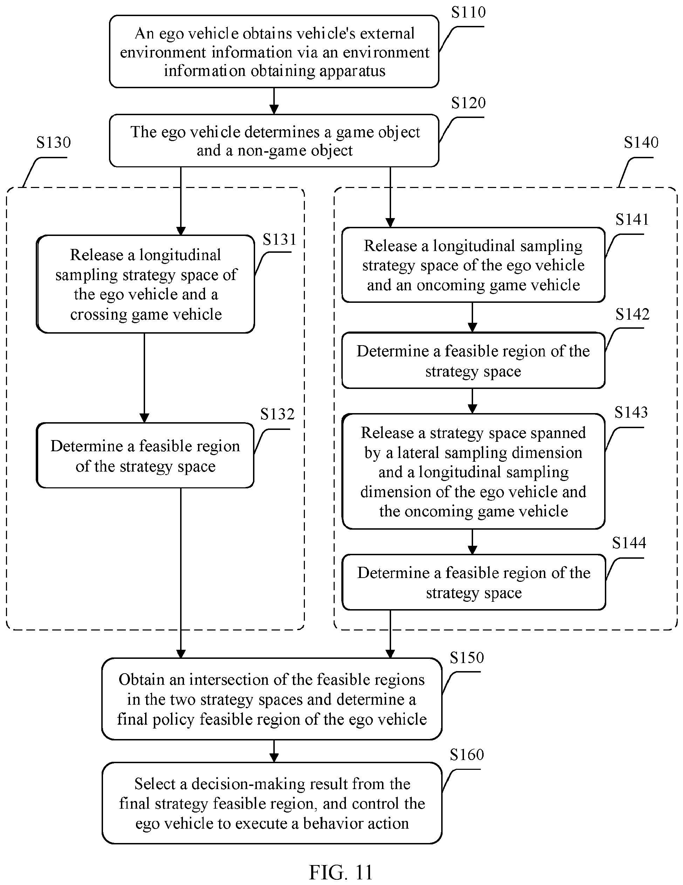

The following describes a specific implementation of the intelligent driving decision-making method provided in an embodiment of this application. This specific implementation is still described by using a traffic scenario in which vehicles travel on road surfaces as an example. As shown in FIG. 10, a scenario of this specific implementation is as follows: An ego vehicle 101 travels on a road, the road is a two-way single lane, and a vehicle 103 travels in an opposite direction, that is, an oncoming game vehicle. There is a vehicle 102 that is in front of the ego vehicle and that is going to cross the road, that is, a crossing game vehicle. Refer to the flowchart shown in FIG. 11. The following describes in detail a traveling control method provided in a specific implementation of this application. The method includes the following steps.

S110: An ego vehicle obtains vehicle's external environment information via an environment information obtaining apparatus 11.

For this step, refer to step S11. Details are not described again.

S120: The ego vehicle determines a game object and a non-game object.

For this step, refer to step S12. Details are not described again. In this step, it is determined that a game object of the ego vehicle is a crossing game vehicle, and a game object is an oncoming game vehicle.

S130: From a plurality of strategy spaces of the ego vehicle and the crossing game vehicle, perform sequential release of the strategy spaces, and determine a game result of the ego vehicle and the crossing game vehicle. Specifically, the following steps S131 and S132 may be included.

S131: According to a principle of first releasing a longitudinal sampling dimension and then a lateral sampling dimension, release a longitudinal acceleration dimension of the ego vehicle and the crossing game vehicle.

From a multi-dimensional game space of the ego vehicle and the crossing game vehicle, the longitudinal acceleration dimension of the ego vehicle and the crossing game vehicle is released, and a first longitudinal sampling strategy space of the ego vehicle and the crossing game vehicle is spanned. Considering vehicle longitudinal/lateral dynamics of the ego vehicle and the crossing game vehicle, a kinematics constraint, and a relative position relationship and a relative speed relationship of the ego vehicle and the crossing game vehicle, and considering that two vehicles have a same mobility capability, it is determined that value ranges of longitudinal accelerations of the ego vehicle and the crossing game vehicle are both [-4,3]. The unit is $m/s^2$, where m represents meter, and s represents second. Based on a computing capability of the ego vehicle and preset decision-making precision, it is determined that sampling intervals of the ego vehicle and the crossing game vehicle are both 1 $m/s^2$.

**Table 1 First released longitudinal sampling strategy space of the ego vehicle and the crossing game vehicle**

| Ae of the ego vehicle / Ao1 of another vehicle | −4 | −3 | −2 | −1 | 0 | 1 | 2 | 3 |
|---|---|---|---|---|---|---|---|---|
| −4 | 0 | 0 | 0 | −1 | −1 | −1 | Cg | Cg |
| −3 | 0 | 0 | 0 | −1 | −1 | −1 | −1 | Cg |
| −2 | 0 | 0 | 0 | −1 | −1 | −1 | −1 | −1 |
| −1 | −1 | −1 | −1 | −1 | −1 | −1 | −1 | −1 |
| 0 | Cy | −1 | −1 | −1 | −1 | −1 | −1 | −1 |
| 1 | Cy | Cy | Cy | −1 | −1 | −1 | −1 | −1 |
| 2 | Cy | Cy | Cy | Cy | −1 | −1 | −1 | −1 |
| 3 | Cy | Cy | Cy | Cy | Cy | −1 | −1 | −1 |

The spanned strategy space is shown in Table 1 when being displayed in a two-dimensional table. In Table 1, a first row lists all values Ae of a longitudinal acceleration of the ego vehicle, and a first column lists all values Ao1 of a longitudinal acceleration of the crossing game vehicle. In other words, the longitudinal sampling strategy space that is released this time and that is of the ego vehicle and the crossing game vehicle includes 8 times 8, that is, 64 longitudinal acceleration behavior-action pairs of the ego vehicle and the crossing game vehicle.

S132: According to a pre-defined method for determining each cost value such as each cost function, calculate a cost value corresponding to each behavior-action pair in the longitudinal sampling strategy space of the ego vehicle and the crossing game vehicle, and determine a strategy feasible region.

In the released 64 behavior-action pairs in Table 1, after the ego vehicle and the crossing game vehicle execute nine sampling actions, in a traffic sub-scenario constructed by the ego vehicle and the crossing game vehicle, passability is very poor (for example, braking and stopping), and the action is an infeasible solution. In Table 1, these action pairs are identified by using a label "0".

In the released 64 behavior-action pairs, after the ego vehicle and the crossing game vehicle execute 39 sampling actions, in a traffic sub-scenario constructed by the ego vehicle and the crossing game vehicle, safety is very poor (for example, collision), and the action is an infeasible solution. In Table 1, these action pairs are identified by using a label "-1".

In the released 64 behavior-action pairs, after the ego vehicle and the crossing game vehicle execute 3 plus 13, namely, 16 sampling actions, in a traffic sub-scenario constructed by the ego vehicle and the crossing game vehicle, a weighted sum of a safety cost value, a comfort cost value, a passability cost value, a lateral offset cost value, a right-of-way cost value, a risk area cost value, and an inter-frame association cost value is greater than a preset cost threshold. This is a feasible solution in the strategy space, and a strategy feasible region of the ego vehicle and the crossing game vehicle is formed.

The longitudinal sampling strategy space is released, and no lateral offset is involved. Therefore, the lateral offset

cost value is 0. A decision is made on a current frame, and a decision-making result of a previous frame is not involved. Therefore, the inter-frame association cost value is 0.

In this case, in an interactive game between the ego vehicle and the crossing game vehicle, sufficient feasible solutions are found in the longitudinal sampling strategy space, and there is no need to continue to find a solution in the lateral sampling dimension. In this case, a quantity of searched behavior-action pairs is 64, and a game in this round consumes less computing power and less computing time.

In addition, a decision-making label may be further added to each behavior-action pair based on a cost value corresponding to each behavior-action pair in the strategy feasible region.

After the ego vehicle and the crossing game vehicle execute three sampling actions, behavior decision-making of the ego vehicle and the crossing game vehicle is: The ego vehicle accelerates for traveling, and the crossing game vehicle decelerates for traveling. Based on a motion status that is of the ego vehicle and the crossing game vehicle and that is obtained at a decision-making start moment in a current frame derivation, it may be derived that after the ego vehicle and the crossing game vehicle execute any one of the three sampling actions, the ego vehicle passes a conflict area before the crossing game vehicle. Therefore, it is determined that an intention decision corresponding to these behavior-action pairs is that the ego vehicle cuts in the crossing game vehicle. Correspondingly, a cutting-in decision-making label of the ego vehicle, that is, "Cg" in Table 1, is set for the three behavior-action pairs.

After the ego vehicle and the crossing game vehicle execute 13 sampling actions, behavior decision-making of the ego vehicle and the crossing game vehicle is: The crossing game vehicle accelerates for traveling, and the ego vehicle decelerates for traveling. Based on a motion status that is of the ego vehicle and the crossing game vehicle and that is obtained at a decision-making start moment in a current frame derivation, it may be derived that after the ego vehicle and the crossing game vehicle execute any one of the 13 sampling actions, the crossing game vehicle passes a conflict area before the ego vehicle. Therefore, it is determined that an intention decision corresponding to these behavior-action pairs is that the crossing game vehicle cuts in the ego vehicle. Correspondingly, a cutting-in decision-making label of the crossing game vehicle, that is, "Cy" in Table 1, is set for the 13 behavior-action pairs.

S140: From a plurality of strategy spaces of the ego vehicle and the oncoming game vehicle, perform sequential release of the strategy spaces, and determine a game result of the ego vehicle and the oncoming game vehicle. Specifically, the following steps S141 to S144 may be included.

S141: According to a principle of first releasing a longitudinal sampling dimension and then a lateral sampling dimension, release a longitudinal sampling dimension of the ego vehicle and the oncoming game vehicle, and span a first longitudinal sampling strategy space of the ego vehicle and the oncoming game vehicle.

From a multi-dimensional game space of the ego vehicle and the oncoming game vehicle, the longitudinal acceleration dimension of the ego vehicle and the oncoming game vehicle is released, and the first longitudinal sampling strategy space of the ego vehicle and the oncoming game vehicle is spanned. Considering vehicle longitudinal/lateral dynamics of the ego vehicle and the oncoming game vehicle, a kinematics constraint, and a relative position relationship and a relative speed relationship of the ego vehicle and the oncoming game vehicle, it is determined that value ranges of longitudinal accelerations of the ego vehicle and the oncoming game vehicle are both [-4,3]. The unit is $m/s^2$. It is determined that sampling intervals of the ego vehicle and the oncoming game vehicle are both 1 $m/s^2$.

The spanned strategy space is shown in Table 2 when being displayed in a two-dimensional table. In Table 2, a first row lists all values Ae of a longitudinal acceleration of the ego vehicle, and a first column lists all values Ao2 of a longitudinal acceleration of the oncoming game vehicle. In other words, the longitudinal sampling strategy space that is released this time and that is of the ego vehicle and the oncoming game vehicle includes 8 times 8, that is, a total of 64 longitudinal acceleration behavior-action pairs of the ego vehicle and the oncoming game vehicle.

**Table 2 Released longitudinal sampling strategy space of the ego vehicle and the oncoming game vehicle**

| Ae of the ego vehicle / Ao2 of the another vehicle | −4 | −3 | −2 | −1 | 0 | 1 | 2 | 3 |
|---|---|---|---|---|---|---|---|---|
| −4 | 0 | 0 | 0 | −1 | −1 | −1 | −1 | −1 |
| −3 | 0 | 0 | 0 | −1 | −1 | −1 | −1 | −1 |
| −2 | 0 | 0 | 0 | −1 | −1 | −1 | −1 | −1 |
| −1 | −1 | −1 | −1 | −1 | −1 | −1 | −1 | −1 |
| 0 | −1 | −1 | −1 | −1 | −1 | −1 | −1 | −1 |
| 1 | −1 | −1 | −1 | −1 | −1 | −1 | −1 | −1 |
| 2 | −1 | −1 | −1 | −1 | −1 | −1 | −1 | −1 |
| 3 | −1 | −1 | −1 | −1 | −1 | −1 | −1 | −1 |

S142: According to a pre-defined method for determining each cost value such as each cost function, calculate a cost value corresponding to each behavior-action pair in the longitudinal sampling strategy space of the ego vehicle and the oncoming game vehicle, and determine a strategy feasible region.

In the released 64 behavior-action pairs, after the ego vehicle and the oncoming game vehicle execute nine sampling actions, in a traffic sub-scenario constructed by the ego vehicle and the oncoming game vehicle, passability is very poor (for example, braking and stopping), and the action is an infeasible solution. In Table 2, these action pairs are identified by using a label "0".

In the released 64 behavior-action pairs, after the ego vehicle and the oncoming game vehicle execute 55 sampling actions, in a traffic sub-scenario constructed by the ego vehicle and the oncoming game vehicle, safety is very poor (for example, collision), and the action is an infeasible solution. In Table 2, these action pairs are identified by using a label "-1".

In other words, after the ego vehicle and the oncoming game vehicle execute the released 64 behavior-action pairs, in the traffic sub-scenario constructed by the ego vehicle and the oncoming game vehicle, a safety cost value or a passability cost value is greater than a preset cost threshold. There is no feasible solution in the strategy space released for the first time, and the strategy feasible region of the ego vehicle and the oncoming game vehicle is null.

S143: Release a lateral offset dimension of the ego vehicle, and span a second strategy space of the ego vehicle and the oncoming game vehicle with a longitudinal acceleration dimension of the ego vehicle and the oncoming game vehicle.

Specifically, some values in the lateral offset dimension of the ego vehicle and some values in the longitudinal acceleration dimension of the ego vehicle and the oncoming game vehicle are released, and the second strategy space of the ego vehicle and the oncoming game vehicle is spanned.

First, from the multi-dimensional game space of the ego vehicle and the oncoming game vehicle, a maximum lateral sampling strategy space spanned by the lateral offset dimension of the ego vehicle and the oncoming game vehicle is determined. FIG. 10 is a schematic diagram of a lateral sampling action determined for each of the two vehicles for lateral offset sampling. In other words, a plurality of lateral offset behavior actions correspond to a plurality of parallel lateral offset traj ectories that may be executed by the vehicles.

Considering vehicle longitudinal/lateral dynamics of the ego vehicle and the oncoming game vehicle, a kinematics constraint, a relative position relationship and a relative speed relationship of the ego vehicle and the oncoming game vehicle, it is determined that lateral offset value ranges of the ego vehicle and the oncoming game vehicle are both [-3,3]. The unit is m, where m represents meter. During sampling, it is determined, based on a computing capability of the ego vehicle and preset decision-making precision, that sampling intervals of the ego vehicle and the oncoming game vehicle are both 1 m. In this case, a released lateral sampling strategy space of the ego vehicle and the oncoming game vehicle is displayed in a two-dimensional table, as shown in a sub-table in an upper part of Table 3. In the

sub-table in the upper part of Table 3, a first row lists all values Oe of a lateral offset of the ego vehicle, and a first column lists all values Oo2 of a lateral offset of the oncoming game vehicle. Therefore, a lateral sampling strategy space spanned by the lateral offset dimension of the ego vehicle and the oncoming game vehicle includes a maximum of 7 times 7, that is, 49 lateral offset behavior-action pairs of the ego vehicle and the oncoming game vehicle.

When a vehicle travels, the vehicle cannot independently make a lateral offset without taking a longitudinal behavior action. Therefore, while releasing the lateral sampling strategy space of the ego vehicle and the oncoming game vehicle, it is necessary to release a plurality of behavior-action pairs of the ego vehicle and the oncoming game vehicle in the longitudinal acceleration dimension.

To reduce computing power and reduce a computing resource, during the release of this time, only some values in the lateral offset dimension of the ego vehicle are released. In addition, some values in the lateral offset dimension of the ego vehicle and some values in the longitudinal sampling dimension and the longitudinal acceleration dimension of the ego vehicle and the oncoming game vehicle span a strategy space released for the second time. In this case, the lateral offset value of the oncoming game vehicle is 0. As shown in the sub-table in the upper part of Table 3, from the lateral sampling strategy space, a lateral offset value of the oncoming game vehicle is 0 and lateral offset values of the ego vehicle are -3, -2, -1, 0, 1, 2, or 3 respectively, to form seven lateral offset behavior-action pairs. The seven lateral offset behavior-action pairs are separately combined with the 64 longitudinal acceleration behavior-action pairs (as shown in Table 2) that are of the ego vehicle and the oncoming game vehicle and that are released previously, to obtain 7 times 64, that is, 448 behavior-action pairs. In this case, in each behavior-action pair, a lateral offset value of the oncoming game vehicle is 0. In the strategy space corresponding to longitudinal acceleration sampling of the ego vehicle and the oncoming game vehicle, a maximum of 64 behavior-action pairs may be released. Compared with this, a quantity of behavior-action pairs released in this case is increased by six times, and is seven times that of those released in the first time.

S 144: According to a method for determining each cost value such as each cost function, separately calculate a cost value corresponding to each behavior-action pair in the strategy space that is released for the second time and that is spanned by some values in the lateral offset dimension of the ego vehicle and some values in the longitudinal acceleration dimension of the ego vehicle and the oncoming game vehicle, and determine a strategy feasible region.

As shown in a sub-table in a lower part of Table 3, when the lateral offset value of the ego vehicle is 1, in the released 64 longitudinal acceleration behavior-action pairs of the ego vehicle and the oncoming game vehicle, after the ego vehicle and the oncoming game vehicle execute 16 sampling actions, in a traffic sub-scenario constructed by the ego vehicle and the oncoming game vehicle, passability is too poor (for example, braking and stopping), and the action is an infeasible solution. In Table 3, these actions are identified by using a label "0".

When the lateral offset value of the ego vehicle is 1, in the released 64 longitudinal acceleration behavior-action pairs of the ego vehicle and the oncoming game vehicle, after the ego vehicle and the oncoming game vehicle execute 48 sampling actions, in a traffic sub-scenario constructed by the ego vehicle and the oncoming game vehicle, a weighted sum of safety, comfort, passability, a lateral offset cost value, a right-of-way cost value, a risk area cost value, and an inter-frame association cost value is greater than a preset cost threshold. This is a feasible solution in the strategy space, and a strategy feasible region of the ego vehicle and the oncoming game vehicle is formed. In Table 3, the 48 action pairs are identified by using a label "1". In this case, an interactive game is in a current frame, and a decision-making result of a previous frame is not involved. Therefore, the inter-frame association cost value is 0.

At this time, 48 feasible solutions have been found in an interactive game between the ego vehicle and the oncoming game vehicle, and there is no need to continue to find a solution in the game space between the ego vehicle and the oncoming game vehicle. A total quantity of searched behavior-action pairs is 64, and a game in this round consumes less computing power and less computing time.

That is, a lateral offset behavior-action pair with a lateral offset value of the oncoming game vehicle being 0 and a lateral offset value of the ego vehicle being 1 is separately combined with the 64 longitudinal acceleration behavior-action pairs that are of the ego vehicle and the oncoming game vehicle and that are released previously, to obtain 64 behavior-action pairs, among which there are 48 feasible solutions (the feasible solutions are shown with shadow and shading in Table 3). These feasible solutions may be added to the strategy feasible region of the ego vehicle and the oncoming game vehicle.

This is because after the ego vehicle laterally offsets to the right by 1 m (the ego vehicle is used as a reference, a lateral offset to the right is positive, and a lateral offset to the left is negative), the ego vehicle and the oncoming game vehicle are already laterally staggered, in the longitudinal sampling strategy space of the ego vehicle and the oncoming game vehicle, the strategy feasible region covers all cases except that both vehicles are braked and stopped (the action pair is shown with shading in Table 3).

In addition, compared with Table 2, when longitudinal accelerations of the ego vehicle and the oncoming game vehicle in the sub-table in the lower part of Table 3 are all -1, a label of a corresponding behavior-action pair is adjusted from "-1" to "0". This is because when the ego vehicle laterally offsets to the right by 1 m, the ego vehicle and the oncoming game vehicle may no longer have a collision risk. In a traffic scenario constructed by the oncoming game vehicle and the ego vehicle to which these behavior-action pairs are mapped, passability is poor (braking and stopping), and the action is still

an infeasible solution. However, the label is adjusted from "-1" to "0".

In addition, in this case, an intention decision may also be determined for the ego vehicle and the oncoming game vehicle, and a strategy label may be set. For details, refer to step S132. Details are not described herein again.

**Table 3 Strategy space spanned by both the lateral sampling strategy space of the ego vehicle and the oncoming game vehicle and the longitudinal sampling strategy space of the ego vehicle and the oncoming game vehicle**

| Oe of the ego vehicle / Oo2 of the another vehicle | −3 | −2 | −1 | 0 | 1 | 2 | 3 |
|---|---|---|---|---|---|---|---|
| −3 | ... | ... | ... | ... | ... | ... | ... |
| −2 | ... | ... | ... | ... | ... | ... | ... |
| −1 | ... | ... | ... | ... | ... | ... | ... |
| 0 | −1 | −1 | −1 | −1 | 1 | 1 | 1 |
| 1 | ... | ... | ... | ... | ... | ... | ... |
| 2 | ... | ... | ... | ... | ... | ... | ... |
| 3 | ... | ... | ... | ... | ... | ... | ... |

| Ae of the ego vehicle / Ao2 of the another vehicle | −4 | −3 | −2 | −1 | 0 | 1 | 2 | 3 |
|---|---|---|---|---|---|---|---|---|
| −4 | 0 | 0 | 0 | 0 | 1 | 1 | 1 | 1 |
| −3 | 0 | 0 | 0 | 0 | 1 | 1 | 1 | 1 |
| −2 | 0 | 0 | 0 | 0 | 1 | 1 | 1 | 1 |
| −1 | 0 | 0 | 0 | 0 | 1 | 1 | 1 | 1 |
| 0 | 1 | 1 | 1 | 1 | 1 | 1 | 1 | 1 |
| 1 | 1 | 1 | 1 | 1 | 1 | 1 | 1 | 1 |
| 2 | 1 | 1 | 1 | 1 | 1 | 1 | 1 | 1 |
| 3 | 1 | 1 | 1 | 1 | 1 | 1 | 1 | 1 |

For the release of the strategy space of the ego vehicle and the oncoming game vehicle, a plurality of sampling values may be selected from the lateral offset dimension of the ego vehicle. For example, lateral offset values of the ego vehicle are 2 or 3 respectively, and more strategy spaces are spanned together with the longitudinal acceleration sampling strategy space of the ego vehicle and the oncoming game vehicle.

In this embodiment, the lateral offset behavior-action pair with the lateral offset value of the oncoming game vehicle being 0 and the lateral offset value of the ego vehicle being 1 and the 64 longitudinal acceleration behavior-action pairs that are of the ego vehicle and the oncoming game vehicle and that are previously released are used to span the strategy space released for the second time. In addition, 48 feasible solutions are found in the strategy space. Therefore, other strategy space does not need to be released. In this way, the interactive game consumes less computing power and less computing time.

**Table 4 Feasible solutions of the ego vehicle and the oncoming game vehicle, and the ego vehicle and the crossing game vehicle**

| Oe of the ego vehicle / Oo2 of the another vehicle | −3 | −2 | −1 | 0 | 1 | 2 | 3 | |
|---|---|---|---|---|---|---|---|---|
| −3 | ... | ... | ... | ... | ... | ... | ... | |
| −2 | ... | ... | ... | ... | ... | ... | ... | |
| −1 | ... | ... | ... | ... | ... | ... | ... | |
| 0 | −1 | −1 | −1 | −1 | 1 | 1 | 1 | |
| 1 | ... | ... | ... | ... | ... | ... | ... | |
| 2 | ... | ... | ... | ... | ... | ... | ... | |
| 3 | ... | ... | ... | ... | ... | ... | ... | |
| Ae of the ego vehicle / Ao2 of the another vehicle | −4 | −3 | −2 | −1 | 0 | 1 | 2 | 3 |
| −4 | 0 | 0 | 0 | 0 | 1 | 1 | 1 | 1 |
| −3 | 0 | 0 | 0 | 0 | 1 | 1 | 1 | 1 |
| −2 | 0 | 0 | 0 | 0 | 1 | 1 | 1 | 1 |
| −1 | 0 | 0 | 0 | 0 | 1 | 1 | 1 | 1 |
| 0 | 1 | 1 | 1 | 1 | 1 | 1 | 1 | 1 |
| 1 | 1 | 1 | 1 | 1 | 1 | 1 | 1 | 1 |
| 2 | 1 | 1 | 1 | 1 | 1 | 1 | 1 | 1 |
| 3 | 1 | 1 | 1 | 1 | 1 | 1 | 1 | 1 |
| Ae of the ego vehicle | −4 | −3 | −2 | −1 | 0 | 1 | 2 | 3 |

| Ao1 of the another vehicle | | | | | | | | |
|---|---|---|---|---|---|---|---|---|
| −4 | 0 | 0 | 0 | −1 | −1 | −1 | Cg | Cg |
| −3 | 0 | 0 | 0 | −1 | −1 | −1 | −1 | Cg |
| −2 | 0 | 0 | 0 | −1 | −1 | −1 | −1 | −1 |
| −1 | −1 | −1 | −1 | −1 | −1 | −1 | −1 | −1 |
| 0 | Cy | −1 | −1 | −1 | −1 | −1 | −1 | −1 |
| 1 | Cy | Cy | Cy | −1 | −1 | −1 | −1 | −1 |
| 2 | Cy | Cy | Cy | Cy | −1 | −1 | −1 | −1 |
| 3 | Cy | Cy | Cy | Cy | Cy | −1 | −1 | −1 |

S150: Obtain an intersection of the strategy feasible region of the ego vehicle and the oncoming game vehicle and the strategy feasible region of the ego vehicle and the crossing game vehicle, and determine a game result of the ego vehicle.

Based on the determined intersection of the strategy feasible region of the ego vehicle and the crossing game vehicle and the strategy feasible region of the ego vehicle and the oncoming game vehicle, a common feasible region of both is found, and a feasible solution with a minimum cost value (that is, the best gains) is found from the common feasible region.

Table 4 shows the feasible solution that is with the minimum cost value (that is, the best gains) and that is found from the common feasible region of the strategy feasible region of the ego vehicle and the oncoming game vehicle in Table 3 and the strategy feasible region of the ego vehicle and the crossing game vehicle in Table 1. The feasible solution is a game decision-making action pair of the ego vehicle, the oncoming game vehicle, and the crossing game vehicle, and is a multi-dimensional behavior-action pair combined by a longitudinal acceleration of the ego vehicle, a longitudinal acceleration of the oncoming game vehicle, a lateral offset of the ego vehicle, and a longitudinal acceleration of the crossing game vehicle.

In other words, the ego vehicle decelerates at a longitudinal acceleration of -2 $m/s^2$ for yielding, and laterally offsets to the right by 1 m to evade the oncoming game vehicle. To ensure passability, the crossing game vehicle accelerates at the longitudinal acceleration of 1 $m/s^2$ to pass the conflict area, and the oncoming game vehicle accelerates at the longitudinal acceleration of 1 $m/s^2$ to pass the conflict area.

After the behavior action is executed by the ego vehicle, the oncoming game vehicle, and the crossing game vehicle, intention decisions are separately as follows: The crossing game vehicle cuts in the ego vehicle, the oncoming game vehicle cuts in the ego vehicle, the ego vehicle travels laterally towards the right to evade the oncoming game vehicle, and the ego vehicle yields to the crossing game vehicle.

S160: Select a decision-making result from the game result of the ego vehicle, select an action pair corresponding to a minimum cost value, and determine an executable action of the ego vehicle based on the action pair, where the executable action of the ego vehicle may be used to control the ego vehicle to execute the action.

In some embodiments, for a plurality of strategy feasible regions in the game result, an action pair may be selected as a decision-making result based on a cost value.

In some embodiments, for a plurality of solutions (that is, behavior-action pairs) in the strategy feasible region in the game result, continuous multi-frame derivations may be further performed on each solution, that is, a temporal sampling dimension is released, to select a behavior-action pair with relatively good time consistency as a traveling decision-making result of the ego vehicle. For details, refer to the descriptions in FIG. 7.

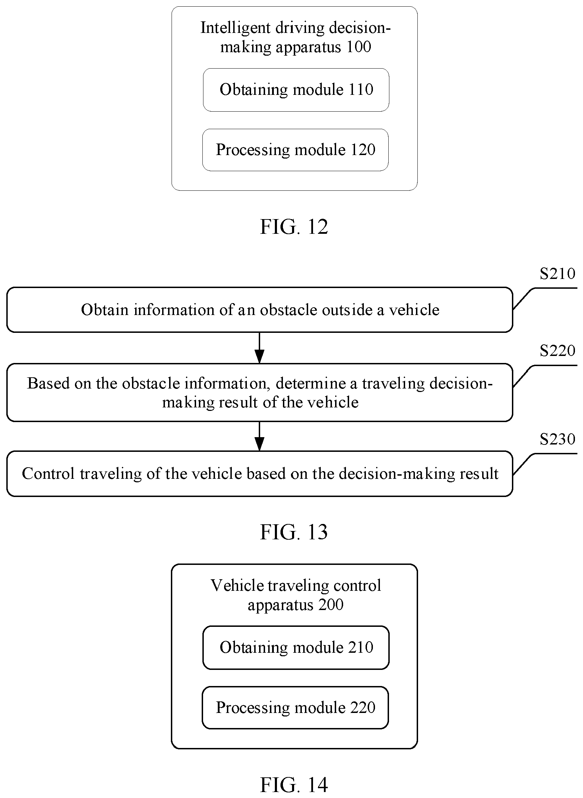

As shown in FIG. 12, this application further provides a corresponding embodiment of an intelligent driving decision-making apparatus. For beneficial effects of the apparatus or a technical problem to be resolved by the apparatus, refer to descriptions in methods corresponding to each apparatus, or refer to descriptions in Summary. Details are not described herein again.

In an embodiment of the intelligent driving decision-making apparatus, an intelligent driving decision-making apparatus 100 includes:

an obtaining module 110, configured to obtain a game object of an ego vehicle. Specifically, the obtaining module 110 is configured to perform step S10 or steps S110 and S120, or each optional embodiment corresponding to the step.

The intelligent driving decision-making apparatus 100 includes a processing module 120, configured to: from a plurality of strategy spaces of the ego vehicle and the game object, perform a plurality of times of release of the plurality of strategy spaces; and after performing one of the plurality of times of release, determine a strategy feasible region of the ego vehicle and the game object based on each released strategy space, and determine a traveling decision-making result of the ego vehicle based on the strategy feasible region. Specifically, the processing module 120 is configured to perform steps S20 to S40, or each optional embodiment corresponding to the step.

In some embodiments, a dimension of the plurality of strategy spaces includes at least one of the following: a longitudinal sampling dimension, a lateral sampling dimension, or a temporal sampling dimension.

In some embodiments, performing the plurality of times of release of the plurality of strategy spaces includes performing the release in a sequence of the following dimensions: the longitudinal sampling dimension, the lateral sampling dimension, and the temporal sampling dimension.

In some embodiments, when the strategy feasible region of the ego vehicle and the game object is determined, a total cost value of a behavior-action pair in the strategy feasible region is determined based on one or more of the following: a safety cost value, a right-of-way cost value, a lateral offset cost value, a passability cost value, a comfort cost value, an inter-frame association cost value, and a risk area cost value of the ego vehicle or the game object.

In some embodiments, when the total cost value of the behavior-action pair is determined based on two or more cost values, each of the cost values has a different weight.

In some embodiments, when there are two or more game objects, the traveling decision-making result of the ego vehicle is determined based on each strategy feasible region of the ego vehicle and each game object.

In some embodiments, the obtaining module 110 is further configured to obtain a non-game object of the ego vehicle. The processing module 120 is further configured to: determine a strategy feasible region of the ego vehicle and the non-game object, where the strategy feasible region of the ego vehicle and the non-game object includes an executable behavior action of the ego vehicle relative to the non-game object; and determine the traveling decision-making result of the ego vehicle based on at least the strategy feasible region of the ego vehicle and the non-game object.

In some embodiments, the processing module 120 is further configured to: determine a strategy feasible region of the traveling decision-making result of the ego vehicle based on an intersection of each strategy feasible region of the ego vehicle and each game object; or determine a strategy feasible region of the traveling decision-making result of the ego vehicle based on an intersection of each strategy feasible region of the ego vehicle and each game object and each strategy feasible region of the ego vehicle and each non-game object.

In some embodiments, the obtaining module 110 is further configured to obtain the non-game object of the ego vehicle. The processing module 120 is further configured to: based on a motion status of the non-game object, constrain a longitudinal sampling strategy space corresponding to the ego vehicle, or constrain a lateral sampling strategy space corresponding to the ego vehicle.

In some embodiments, the obtaining module 110 is further configured to obtain a non-game object of the game object of the ego vehicle. The processing module 120 is further configured to: based on a motion status of the non-game object, constrain a longitudinal sampling strategy space corresponding to the game object of the ego vehicle, or constrain a lateral sampling strategy space corresponding to the game object of the ego vehicle.

In some embodiments, when the intersection is an empty set, a conservative traveling decision of the ego vehicle is performed. The conservative decision includes an action of making the ego vehicle safely stop or an action of making the ego vehicle safely decelerate for traveling.

In some embodiments, the game object or a non-game object is determined by attention.

In some embodiments, the processing module 120 is further configured to display at least one of the following through a human-computer interaction interface: the traveling decision-making result of the ego vehicle, the strategy feasible region of the decision-making result, a traveling trajectory of the ego vehicle corresponding to the traveling decision-making result of the ego vehicle, or a traveling trajectory of a game object corresponding to the traveling decision-making result of the ego vehicle.

The traveling decision-making result of the ego vehicle may be a decision-making result of a current single-frame derivation, or may be decision-making results respectively corresponding to a plurality of executed single-frame derivations. The decision-making result may be a behavior action executed by the ego vehicle, may be a behavior action executed by the game object, or may be an intention decision corresponding to the behavior action executed by the ego vehicle, for example, Cg or Cy in Table 1, such as cutting-in, yielding, or evading.

The strategy feasible region of the decision-making result may be a strategy feasible region of the current single-frame derivation, or may be strategy feasible regions respectively corresponding to the plurality of executed single-frame derivations.

The traveling trajectory of the ego vehicle corresponding to the traveling decision-making result of the ego vehicle may be a traveling trajectory of the ego vehicle corresponding to a first single-frame derivation in one-step decision-making, for example, T1 in FIG. 7, or may be ego vehicle traveling trajectories obtained by sequentially connecting the plurality of executed single-frame derivations in the one-step decision-making, for example, T1, T2, and Tn in FIG. 7.

The traveling trajectory of the game object corresponding to the traveling decision-making result of the ego vehicle may be a traveling trajectory of the game object corresponding to the first single-frame derivation in the one-step decision-making, for example, T1 in FIG. 7, or may be game object traveling trajectories obtained by sequentially connecting the plurality of executed single-frame derivations in the one-step decision-making, for example, T1, T2, and Tn in FIG. 7.

As shown in FIG. 13, an embodiment of this application further provides a vehicle traveling control method, including the following steps.

S210: Obtain information of an obstacle outside a vehicle.

S220: Based on the obstacle information, determine a traveling decision-making result of the vehicle according to any one of the foregoing intelligent driving decision-making methods.

S230: Control traveling of the vehicle based on the decision-making result.

As shown in FIG. 14, an embodiment of this application further provides a vehicle traveling control apparatus 200, including: an obtaining module 210, configured to obtain an obstacle outside a vehicle; and a processing module 220, configured to: for the obstacle, determine a traveling decision-making result of the vehicle according to any one of the foregoing intelligent driving decision-making methods, where the processing module is further configured to control traveling of the vehicle based on the decision-making result.

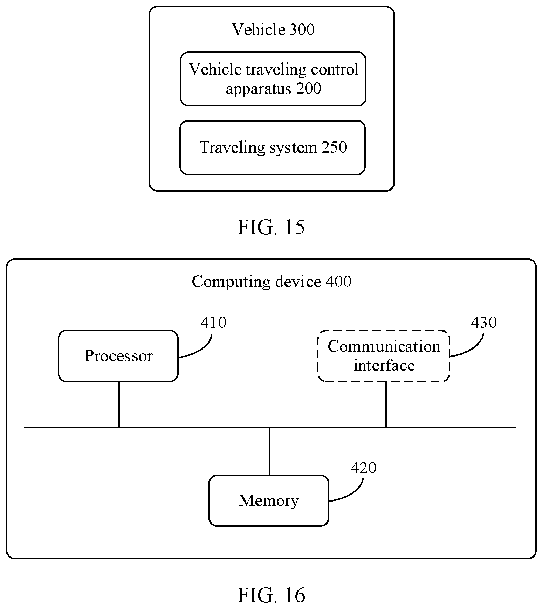

As shown in FIG. 15, an embodiment of this application further provides a vehicle 300, including the foregoing vehicle traveling control apparatus 200 and a traveling system 250. The vehicle traveling control apparatus 200 controls the traveling system 250. In some embodiments, the traveling system 250 may include the traveling system 13 in FIG. 2.

FIG. 16 is a schematic diagram of a structure of a computing device 400 according to an embodiment of this application. The computing device 400 includes a processor 410 and a memory 420, and may further include a communication interface 430.

It should be understood that the communication interface 430 in the computing device 400 shown in FIG. 16 may be configured to communicate with another device.

The processor 410 may be connected to the memory 420. The memory 420 may be configured to store program code and data. Therefore, the memory 420 may be a storage unit in the processor 410, or an external storage unit independent of the processor 410, or a component including a storage unit in the processor 410 and an external storage unit independent of the processor 410.

Optionally, the computing device 400 may further include a bus. The memory 420 and the communication interface 430 may be connected to the processor 410 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that, in this embodiment of this application, the processor 410 may be a central processing unit (central processing unit, CPU). The processor may alternatively be another general-purpose processor, a digital signal processor (digital signal processor, DSP), an application-specific integrated circuit (Application-specific integrated circuit, ASIC), a field programmable gate matrix (field programmable gate array, FPGA) or another programmable logic device, a discrete gate or transistor logic device, a discrete hardware component, or the like. The general-purpose processor may be a microprocessor, or the processor may be any conventional processor or the like. Alternatively, the processor 410 is configured to execute a related program by using one or more integrated circuits, to implement technical solutions provided in embodiments of this application.

The memory 420 may include a read-only memory and a random-access memory, and provide instructions and data to the processor 410. A part of the processor 410 may further include a non-volatile random-access memory. For example, the processor 410 may further store device type information.

When the computing device 400 runs, the processor 410 executes computer-executable instructions in the memory 420 to perform operation steps of the foregoing methods.

It should be understood that the computing device 400 according to this embodiment of this application may correspond to an execution body of the methods according to embodiments of this application, and the foregoing and other operations and/or functions of modules in the computing device 400 are separately intended to implement corresponding procedures of the methods in the embodiments. For brevity, details are not described herein again.

A person of ordinary skill in the art may be aware that the units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding

process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes a medium that may store program code, such as a USB flash drive, a removable hard disk, a read-only memory (Read-Only Memory, ROM), a random-access memory (Random-Access Memory, RAM), a magnetic disk, a compact disc, or the like.

An embodiment of this application further provides a computer-readable storage medium. The computer-readable storage medium stores a computer program. When being executed by a processor, the program is used to perform the foregoing method. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this specification, the computer-readable storage medium may be any tangible medium that contains or stores a program for use by or in combination with an instruction execution system, apparatus, or device.

The computer-readable signal medium may include a data signal that is propagated in a baseband or as part of a carrier wave, in which computer-readable program code is carried. Such a propagated data signal may be in a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

Program code included in the computer-readable medium may be transmitted by using any suitable medium, including but not limited to Wi-Fi, a wire, an optical cable, RF, and the like, or any suitable combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer, may be executed as a separate software package, some may be executed on a user computer while some is executed on a remote computer, or the code may be entirely executed on a remote computer or a server. When a remote computer is involved, the remote computer may be connected to a user computer through any type of network, including a local area network (LAN) or a wide area network (WAN), or may be connected to an external computer (for example, connected by using an internet service provider through the internet).

In this specification and claims, the terms such as "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this application described herein may be implemented in an order other than the order illustrated or

described herein.

In the foregoing description, the numbers of steps, such as S116, S124, and on the like, do not necessarily indicate that the steps are performed according to the sequence. If permitted, the sequence of the steps may be exchanged, or the steps may be performed simultaneously.

The terms "include" and "comprise" used in this specification and claims should not be construed as being limited to the content listed below, and do not exclude other elements or steps. It should be construed as specifying existence of a mentioned feature, whole, step, or part, but does not preclude existence or addition of one or more other features, wholes, steps, or parts and their combinations. Therefore, the expression "a device including an apparatus A and an apparatus B" should not be limited to a device including only a component A and a component B.

"One embodiment" or "an embodiment" mentioned in this specification indicates that a particular feature, structure, or property that is described with reference to the embodiment is included in at least one embodiment of this application. Therefore, the term "in one embodiment" or "in an embodiment" that appears in this specification does not necessarily indicate a same embodiment, but may indicate a same embodiment. Further, in one or more embodiments, the particular features, structures, or properties may be combined in any proper manner, as will be clear from this disclosure to a person of ordinary skill in the art. It should be noted that the foregoing is merely example embodiments and technical principles of this application. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

**1.** An intelligent driving decision-making method, comprising:

obtaining (S10) a game object of an ego vehicle, comprising:

obtaining (S11) ego vehicle external environment information, wherein the vehicle external environment information comprises at least one obstacle, and
identifying (S12) a game object of an ego vehicle from an obstacle of the at least one obstacle,

wherein an attention value is allocated to each obstacle of the at least one obstacle by the ego vehicle, where an obstacle that has an intention conflict or a trajectory conflict with the ego vehicle is allocated a higher attention value, and wherein an obstacle is identified as a game object if an attention value of said obstacle passes a threshold; and
from a plurality of strategy spaces of the ego vehicle and the game object, performing (S20) a plurality of times of release of the plurality of strategy spaces; and after performing one of the plurality of times of release, determining a strategy feasible region of the ego vehicle and the game object based on each released strategy space, and determining a traveling decision-making result of the ego vehicle based on the strategy feasible region;
wherein:

a strategy space is a multi-dimensional space that encompasses possible strategies that the ego vehicle and the game object can adopt in a given traffic scenario;
a strategy feasible region is a subset of strategies that are considered feasible; and
releasing a strategy space refers to exploring and evaluating different strategies of a strategy space to determine feasibility.

**2.** The method according to claim 1, wherein
a dimension of the plurality of strategy spaces comprises at least one of the following: a longitudinal sampling dimension, a lateral sampling dimension, or a temporal sampling dimension.

**3.** The method according to claim 2, wherein the performing a plurality of times of release of the plurality of strategy spaces comprises performing the release in a sequence of the following dimensions: the longitudinal sampling dimension, the lateral sampling dimension, and the temporal sampling dimension.

**4.** The method according to any one of claims 1 to 3, wherein when the strategy feasible region of the ego vehicle and the

game object is determined, a total cost value of a behavior-action pair in the strategy feasible region is determined based on one or more of the following:
a safety cost value, a right-of-way cost value, a lateral offset cost value, a passability cost value, a comfort cost value, an inter-frame association cost value, and a risk area cost value of the ego vehicle or the game object.

**5.** The method according to claim 4, wherein when the total cost value of the behavior-action pair is determined based on two or more cost values, each of the cost values has a different weight.

**6.** The method according to claim **1,** wherein when there are two or more game objects, the traveling decision-making result of the ego vehicle is determined based on each strategy feasible region of the ego vehicle and each game object.

**7.** The method according to any one of claims 1 to 6, further comprising:

obtaining a non-game object of the ego vehicle;
determining a strategy feasible region of the ego vehicle and the non-game object; and
determining the traveling decision-making result of the ego vehicle based on at least the strategy feasible region of the ego vehicle and the non-game object.

**8.** The method according to claim 6 or 7, wherein a strategy feasible region of the traveling decision-making result of the ego vehicle is determined based on an intersection of each strategy feasible region of the ego vehicle and each game object; or
a strategy feasible region of the traveling decision-making result of the ego vehicle is determined based on an intersection of each strategy feasible region of the ego vehicle and each game object and each strategy feasible region of the ego vehicle and each non-game object.

**9.** The method according to any one of claims 2 to 8, further comprising:

obtaining the non-game object of the ego vehicle; and
based on a motion status of the non-game object, constraining a longitudinal sampling strategy space corresponding to the ego vehicle, or constraining a lateral sampling strategy space corresponding to the ego vehicle.

**10.** The method according to any one of claims 2 to 8, further comprising:

obtaining a non-game object of the game object of the ego vehicle; and
based on a motion status of the non-game object, constraining a longitudinal sampling strategy space corresponding to the game object of the ego vehicle, or constraining a lateral sampling strategy space corresponding to the game object of the ego vehicle.

**11.** The method according to claim 8, wherein when the intersection is an empty set, a conservative traveling decision of the ego vehicle is performed; and the conservative decision comprises an action of making the ego vehicle safely stop or an action of making the ego vehicle safely decelerate for traveling.

**12.** The method according to claim 1, wherein a non-game object is determined by one or more attention values.

**13.** The method according to any one of claims 1 to 12, further comprising: displaying at least one of the following through a human-computer interaction interface:
the traveling decision-making result of the ego vehicle, the strategy feasible region of the decision-making result, a traveling trajectory of the ego vehicle corresponding to the traveling decision-making result of the ego vehicle, or a traveling trajectory of the game object corresponding to the traveling decision-making result of the ego vehicle.

**14.** An intelligent driving decision-making apparatus, comprising:

an obtaining module, configured to obtain a game object of an ego vehicle, comprising:

obtaining (S11) ego vehicle external environment information, wherein the vehicle external environment information comprises at least one obstacle, and
identifying (S12) a game object of an ego vehicle from an obstacle of the at least one obstacle,

wherein an attention value is allocated to each obstacle of the at least one obstacle by the ego vehicle, where an obstacle that has an intention conflict or a trajectory conflict with the ego vehicle is allocated a higher attention value, and wherein an obstacle is identified as a game object if an attention value of said obstacle passes a threshold; and
a processing module, configured to: from a plurality of strategy spaces of the ego vehicle and the game object, perform a plurality of times of release of the plurality of strategy spaces; and after performing one of the plurality of times of release, determine a strategy feasible region of the ego vehicle and the game object based on each released strategy space, and determine a traveling decision-making result of the ego vehicle based on the strategy feasible region;
wherein:

a strategy space is a multi-dimensional space that encompasses possible strategies that the ego vehicle and the game object can adopt in a given traffic scenario;
a strategy feasible region is a subset of strategies that are considered feasible; and
releasing a strategy space refers to exploring and evaluating different strategies of a strategy space to determine feasibility.

**15.** A vehicle traveling control method, comprising:

obtaining an obstacle outside a vehicle;
for the obstacle, determining a traveling decision-making result of the vehicle by using the method according to any one of claims 1 to 13; and
controlling traveling of the vehicle based on the decision-making result.

**Patentansprüche**

**1.** Verfahren für intelligente Fahrentscheidungsfindungen, umfassend:
Erhalten (S10) eines Spielobjekts eines Ego-Fahrzeugs, wobei das Erhalten umfasst:

Erhalten (S11) von Außenumgebungsinformationen eines Ego-Fahrzeugs, wobei die Außenumgebungsinformationen des Fahrzeugs mindestens ein Hindernis umfassen; und
Identifizieren (S12) eines Spielobjekts eines Ego-Fahrzeugs aus einem Hindernis des mindestens einen Hindernisses, wobei jedem Hindernis des mindestens einen Hindernisses von dem Ego-Fahrzeug ein Aufmerksamkeitswert zugewiesen wird, wobei einem Hindernis, das einen Absichtenkonflikt oder Fahrstreckenkonflikt mit dem Ego-Fahrzeug aufweist, ein höherer Aufmerksamkeitswert zugewiesen wird, und wobei ein Hindernis als ein Spielobjekt identifiziert wird, wenn ein Aufmerksamkeitswert des Hindernisses einen Schwellenwert überschreitet; und
aus einer Vielzahl von Strategieräumen des Ego-Fahrzeugs und des Spielobjekts, Durchführen (S20) einer Vielzahl von Freigabezeiten der Vielzahl von Strategieräumen; und nach dem Durchführen von einer aus der Vielzahl von Freigabezeiten, Ermitteln eines für eine Strategie machbaren Bereichs des Ego-Fahrzeugs und des Spielobjekts basierend auf jedem freigegebenen Strategieraum und Ermitteln eines Ergebnisses einer Fahrentscheidungsfindung des Ego-Fahrzeugs basierend auf dem für eine Strategie machbaren Bereich;
wobei:

ein Strategieraum ein mehrdimensionaler Raum ist, der mögliche Strategien einschließt, die von dem Ego-Fahrzeug und dem Spielobjekt in einem gegebenen Verkehrsszenarium übernommen werden können;
ein für eine Strategie machbarer Bereich ein Teilsatz von Strategien ist, die als machbar betrachtet werden; und
ein Freigeben eines Strategieraums sich auf ein Erforschen und ein Beurteilen verschiedener Strategien eines Strategieraums bezieht, um eine Machbarkeit zu ermitteln.

**2.** Verfahren nach Anspruch 1, wobei
eine Dimension der Vielzahl von Strategieräumen mindestens eine der Folgenden umfasst: eine Abtastdimension in Längsrichtung, eine seitliche Abtastdimension oder eine zeitliche Abtastdimension.

**3.** Verfahren nach Anspruch 2, wobei das Durchführen einer Vielzahl von Freigabezeiten der Vielzahl von Strategieräumen ein Durchführen der Freigabe in einer Abfolge der folgenden Dimensionen umfasst: der Abtastdimension in

Längsrichtung, der seitlichen Abtastdimension und der zeitlichen Abtastdimension.

4. Verfahren nach einem der Ansprüche 1 bis 3, wobei, wenn der für eine Strategie machbare Bereich des Ego-Fahrzeugs und des Spielobjekts ermittelt wird, ein Gesamtaufwandswert eines Verhalten-Aktion-Paars in dem für eine Strategie machbaren Bereich basierend auf einem oder mehreren der Folgenden ermittelt wird: einem Aufwandswert für Sicherheit, einem Aufwandswert für Vorfahrtsrecht, einem Aufwandswert für seitlichen Abstand, einem Aufwandswert für Passierbarkeit, einem Aufwandswert für Fahrkomfort, einem Aufwandswert für Verknüpfungen von Einzelbildern und einem Aufwandswert für einen Risikobereich des Ego-Fahrzeugs und des Spielobjekts.

5. Verfahren nach Anspruch 4, wobei, wenn der Gesamtaufwandswert des Verhalten-Aktion-Paars basierend auf zwei oder mehr Aufwandswerten ermittelt wird, jeder der Aufwandswerte eine unterschiedliche Gewichtung aufweist.

6. Verfahren nach Anspruch 1, wobei, wenn zwei oder mehr Spielobjekte vorhanden sind, das Ergebnis der Fahrentscheidungsfindung des Ego-Fahrzeugs basierend auf jedem des für eine Strategie machbaren Bereichs des Ego-Fahrzeugs und von jedem Spielobjekt ermittelt wird.

7. Verfahren nach einem der Ansprüche 1 bis 6, das außerdem umfasst:

Erhalten eines Nicht-Spielobjekts des Ego-Fahrzeugs;
Ermitteln eines für eine Strategie machbaren Bereichs des Ego-Fahrzeugs und des Nicht-Spielobjekts; und
Ermitteln des Ergebnisses der Fahrentscheidungsfindung des Ego-Fahrzeugs basierend auf mindestens einem für eine Strategie machbaren Bereichs des Ego-Fahrzeugs und des Nicht-Spielobjekts.

8. Verfahren nach Anspruch 6 oder 7, wobei ein für eine Strategie machbarer Bereich des Ergebnisses der Fahrentscheidungsfindung des Ego-Fahrzeugs basierend auf einer Schnittmenge von jedem für eine Strategie machbaren Bereich des Ego-Fahrzeugs und von jedem Spielobjekt ermittelt wird; oder
wobei ein für eine Strategie machbarer Bereich des Ergebnisses der Fahrentscheidungsfindung des Ego-Fahrzeugs basierend auf einer Schnittmenge von jedem für eine Strategie machbaren Bereich des Ego-Fahrzeugs und von jedem Spielobjekt und von jedem für eine Strategie machbaren Bereich des Ego-Fahrzeugs und von jedem Nicht-Spielobjekt ermittelt wird.

9. Verfahren nach einem der Ansprüche 2 bis 8, das außerdem umfasst:

Erhalten des Nicht-Spielobjekts des Ego-Fahrzeugs; und
basierend auf einem Bewegungszustand des Nicht-Spielobjekts, Beschränken eines Abtaststrategieraums in Längsrichtung, der dem Ego-Fahrzeug entspricht, oder Beschränken eines seitlichen Abtaststrategieraums, der dem Ego-Fahrzeug entspricht.

10. Verfahren nach einem der Ansprüche 2 bis 8, das außerdem umfasst:

Erhalten eines Nicht-Spielobjekts des Spielobjekts des Ego-Fahrzeugs; und
basierend auf einem Bewegungszustand des Nicht-Spielobjekts, Beschränken eines Abtaststrategieraums in Längsrichtung, der dem Spielobjekt des Ego-Fahrzeugs entspricht, oder Beschränken eines seitlichen Abtaststrategieraums, der dem Spielobjekt des Ego-Fahrzeugs entspricht.

11. Verfahren nach Anspruch 8, wobei, wenn die Schnittmenge ein leerer Satz ist, eine konservative Fahrentscheidung des Ego-Fahrzeugs durchgeführt wird und wobei die konservative Entscheidung eine Aktion umfasst, die das Ego-Fahrzeug veranlasst, sicher anzuhalten oder eine Aktion umfasst, die das Ego-Fahrzeug veranlasst, eine Fahrt sicher zu verlangsamen.

12. Verfahren nach Anspruch 1, wobei ein Nicht-Spielobjekt durch einen oder mehrere Aufmerksamkeitswerte ermittelt wird.

13. Verfahren nach einem der Ansprüche 1 bis 12, das außerdem umfasst: Anzeigen mindestens eines der Folgenden auf einer Mensch-Computer-Interaktionsoberfläche:
des Ergebnisses der Fahrentscheidungsfindung des Ego-Fahrzeugs, des für eine Strategie machbaren Bereichs des Ergebnisses der Entscheidungsfindung, einer Fahrstrecke des Ego-Fahrzeugs, die dem Ergebnis der Fahrentscheidungsfindung des Ego-Fahrzeugs entspricht, oder einer Fahrstrecke des Spielobjekts, die dem Ergebnis der

Fahrentscheidungsfindung des Ego-Fahrzeugs entspricht.

**14.** Vorrichtung für intelligente Fahrentscheidungsfindungen, die umfasst:
ein Empfangsmodul, das konfiguriert ist zum Erhalten eines Spielobjekts eines Ego-Fahrzeugs, wobei das Erhalten umfasst:

Erhalten (S11) von Außenumgebungsinformationen eines Ego-Fahrzeugs, wobei die Außenumgebungsinformationen des Fahrzeugs mindestens ein Hindernis umfassen, und
Identifizieren (S12) eines Spielobjekts eines Ego-Fahrzeugs aus einem Hindernis des mindestens einen Hindernisses,
wobei jedem Hindernis des mindestens einen Hindernisses von dem Ego-Fahrzeug ein Aufmerksamkeitswert zugewiesen wird, wobei einem Hindernis, das einen Absichtenkonflikt oder Fahrstreckenkonflikt mit dem Ego-Fahrzeug aufweist, ein höherer Aufmerksamkeitswert zugewiesen wird, und wobei ein Hindernis als ein Spielobjekt identifiziert wird, wenn ein Aufmerksamkeitswert des Hindernisses einen Schwellenwert überschreitet; und
ein Verarbeitungsmodul, das konfiguriert ist zum: aus einer Vielzahl von Strategieräumen des Ego-Fahrzeugs und des Spielobjekts, Durchführen einer Vielzahl von Freigabezeiten der Vielzahl von Strategieräumen; und nach dem Durchführen von einer aus der Vielzahl von Freigabezeiten, Ermitteln eines für eine Strategie machbaren Bereichs des Ego-Fahrzeugs und des Spielobjekts basierend auf jedem freigegebenen Strategieraum und Ermitteln eines Ergebnisses einer Fahrentscheidungsfindung des Ego-Fahrzeugs basierend auf dem für eine Strategie machbaren Bereich;
wobei:

ein Strategieraum ein mehrdimensionaler Raum ist, der mögliche Strategien einschließt, die von dem Ego-Fahrzeug und dem Spielobjekt in einem gegebenen Verkehrsszenarium übernommen werden können;
ein für eine Strategie machbarer Bereich ein Teilsatz von Strategien ist, die als machbar betrachtet werden; und
ein Freigeben eines Strategieraums sich auf ein Erforschen und ein Beurteilen verschiedener Strategien eines Strategieraums bezieht, um eine Machbarkeit zu ermitteln.

**15.** Fahrsteuerverfahren eines Fahrzeugs, das umfasst:

Erhalten eines Hindernisses außerhalb eines Fahrzeugs;
für das Fahrzeug, Ermitteln eines Ergebnisses einer Fahrentscheidungsfindung des Fahrzeugs, indem das Verfahren nach einem der Ansprüche 1 bis 13 verwendet wird; und
Steuern des Fahrens des Fahrzeugs basierend auf dem Ergebnis der Entscheidungsfindung.

## Revendications

**1.** Procédé de prise de décisions de conduite intelligent, comprenant :
l'obtention (S10) d'un objectif de jeu d'un véhicule ego, comprenant :

l'obtention (S11), d'informations sur l'environnement externe du véhicule ego, les informations sur l'environnement externe du véhicule comprenant au moins un obstacle, et
l'identification (S12) d'un objectif de jeu d'un véhicule ego à partir d'un obstacle parmi l'au moins un obstacle, une valeur d'attention étant attribuée à chaque obstacle parmi l'au moins un obstacle par le véhicule ego, un obstacle qui a un conflit d'intention ou un conflit de trajectoire avec le véhicule ego se voyant attribuer une valeur d'attention plus élevée, et un obstacle étant identifié comme un objectif de jeu si une valeur d'attention dudit obstacle dépasse un seuil ; et
à partir d'une pluralité d'espaces de stratégies du véhicule ego et de l'objectif de jeu, l'exécution (S20) d'une pluralité de temps de libération de la pluralité d'espaces de stratégies ; et après l'exécution d'un temps parmi la pluralité de temps de libération, la détermination d'une région faisable de stratégies du véhicule ego et de l'objectif de jeu en se basant sur chaque espace de stratégies libéré, et la détermination d'un résultat de prise de décision de travelling du véhicule ego en se basant sur la région faisable de stratégies ;
dans lequel :

un espace de stratégies est un espace multi-dimensionnel qui englobe des stratégies possibles que le

véhicule ego et l'objectif de jeu peuvent adopter dans un scénario de circulation donné ;
une région faisable de stratégies est un sous-ensemble de stratégies qui sont considérées comme faisables ; et
la libération d'un espace de stratégies se rapporte à l'exploration et à l'évaluation de différentes stratégies d'un espace de stratégies pour déterminer la faisabilité.

**2.** Procédé selon la revendication 1, dans lequel
une dimension de la pluralité d'espaces de stratégies comprend au moins une des dimensions suivantes : une dimension d'échantillonnage longitudinal, une dimension d'échantillonnage latéral, ou une dimension d'échantillonnage temporel.

**3.** Procédé selon la revendication 2, dans lequel l'exécution d'une pluralité de temps de libération de la pluralité d'espaces de stratégies comprend l'exécution de la libération dans une séquence des dimensions suivantes : la dimension d'échantillonnage longitudinal, la dimension d'échantillonnage latéral, et la dimension d'échantillonnage temporel.

**4.** Procédé selon l'une quelconque des revendications 1 à 3, dans lequel, lorsque la région faisable de stratégies du véhicule ego et de l'objectif de jeu est déterminée, une valeur de coût total d'une paire comportement-action dans la région faisable de stratégies est déterminée en se basant sur une ou plusieurs des valeurs de coût suivantes :
une valeur de coût de sécurité, une valeur de coût de droit de passage, une valeur de coût de décalage latéral, une valeur de coût de passabilité, une valeur de coût confort, une valeur de coût d'association d'images/trames successives, et une valeur de coût de zone de risque du véhicule ego ou de l'objectif de jeu.

**5.** Procédé selon la revendication 4, dans lequel, lorsque la valeur de coût total de la paire comportement-action est déterminée en se basant sur deux valeurs de coût ou plus, chacune des valeurs de coût a un poids différent.

**6.** Procédé selon la revendication 1, dans lequel, lorsqu'il y a deux objectifs de jeu ou plus, le résultat de la prise de décision de travelling du véhicule ego est déterminé en se basant sur chaque région faisable de stratégies du véhicule ego et de chaque objectif de jeu.

**7.** Procédé selon l'une quelconque des revendications 1 à 6, comprenant en outre :

l'obtention d'un objectif de non-jeu du véhicule ego ;
la détermination d'une région faisable de stratégies du véhicule ego et de l'objectif de non-jeu ; et
la détermination du résultat de la prise de décision de travelling du véhicule ego en se basant au moins sur la région faisable de stratégies du véhicule ego et sur l'objectif de non-jeu.

**8.** Procédé selon la revendication 6 ou 7, dans lequel une région faisable de stratégies du résultat de la prise de décision de travelling du véhicule ego est déterminée en se basant sur une intersection de chaque région faisable de stratégies du véhicule ego et de chaque objectif de jeu ; ou
une région faisable de stratégies du résultat de la prise de décision de travelling du véhicule ego est déterminée en se basant sur une intersection de chaque région faisable de stratégies du véhicule ego et de chaque objectif de jeu et de chaque région faisable de stratégies du véhicule ego et de chaque objectif de non-jeu.

**9.** Procédé selon l'une quelconque des revendications 2 à 8, comprenant en outre :

l'obtention de l'objectif de non-jeu du véhicule ego ; et
en se basant sur un état de mouvement de l'objectif de non-jeu, la restriction d'un espace de stratégies d'échantillonnage longitudinal correspondant au véhicule ego, ou la restriction d'un espace de stratégies d'échantillonnage latéral correspondant au véhicule ego.

**10.** Procédé selon l'une quelconque des revendications 2 à 8, comprenant en outre :

l'obtention d'un objectif de non-jeu de l'objectif de jeu du véhicule ego ; et
en se basant sur un état de mouvement de l'espace de non-jeu, la restriction d'un espace de stratégies d'échantillonnage longitudinal correspondant à l'objectif de jeu du véhicule ego, ou la restriction d'un espace de stratégies d'échantillonnage latéral correspondant à l'objectif de jeu du véhicule ego.

**11.** Procédé selon la revendication 8, dans lequel, lorsque l'intersection est un ensemble vide, une décision de travelling conservatrice du véhicule ego est exécutée ; et la décision de travelling conservatrice comprend une action qui fait le véhicule ego s'arrêter en toute sécurité ou une action qui fait le véhicule ego décélérer en toute sécurité pour le travelling.

**12.** Procédé selon la revendication 1, dans lequel un objectif de non-jeu est déterminé par une ou plusieurs valeurs d'attention.

**13.** Procédé selon l'une quelconque des revendications 1 à 12, comprenant en outre :
l'affichage d'au moins une des informations suivantes au moyen d'une interface d'interaction homme-ordinateur : le résultat de la prise de décision de travelling du véhicule ego, la région faisable de stratégies du résultat de la prise de décision de traveling, une trajectoire de travelling du véhicule ego correspondant au résultat de la prise de décision de traveling du véhicule ego, ou une trajectoire de travelling de l'objectif de jeu correspondant au résultat de la prise de décision de travelling du véhicule ego.

**14.** Procédé de prise de décisions de conduite intelligent, comprenant :
un module d'obtention, configuré de façon à obtenir un objectif de jeu d'un véhicule ego, comprenant :

l'obtention (S11), d'informations sur l'environnement externe du véhicule ego, les informations sur l'environnement externe du véhicule comprenant au moins un obstacle, et
l'identification (S12) d'un objectif de jeu d'un véhicule ego à partir d'un obstacle parmi l'au moins un obstacle, une valeur d'attention étant attribuée à chaque obstacle pami l'au moins un obstacle par le véhicule ego, un obstacle qui a un conflit d'intention ou un conflit de trajectoire avec le véhicule ego se voyant attribuer une valeur d'attention plus élevée, et un obstacle étant identifié comme un objectif de jeu si une valeur d'attention dudit obstacle dépasse un seuil ; et
un module de traitement configuré de façon à : à partir d'une pluralité d'espaces de stratégies du véhicule ego et de l'objectif de jeu, exécuter une pluralité de temps de libération de la pluralité d'espaces de stratégies ; et, après l'exécution d'un temps parmi la pluralité de temps de libération, déterminer une région faisable de stratégies du véhicule ego et de l'objectif de jeu en se basant sur chaque espace de stratégies libéré, et déterminer un résultat de prise de décision de travelling du véhicule ego en se basant sur la région faisable de stratégies ;
dans lequel :

un espace de stratégies est un espace multi-dimensionnel qui englobe des stratégies possibles que le véhicule ego et l'objectif de jeu peuvent adopter dans un scénario de circulation donné ;
une région faisable de stratégies est un sous-ensemble de stratégies qui sont considérées comme faisables ; et
la libération d'un espace de stratégies se rapporte à l'exploration et à l'évaluation de différentes stratégies d'un espace de stratégies pour déterminer la faisabilité.

**15.** Procédé de commande de travelling de véhicule, comprenant :

l'obtention d'un obstacle à l'extérieur d'un véhicule ;
pour l'obstacle, la détermination d'un résultat de prise de décision de travelling du véhicule en utilisant le procédé selon l'une quelconque des revendications 1 à 13 ; et
la commande du travelling du véhicule en se basant sur le résultat de la prise de décision de travelling.

902
903
A
905
901
904

FIG. 1

Vehicle 10
Environment information obtaining apparatus 11
Communication apparatus 14
Navigation apparatus 15
Display apparatus 16
Control apparatus 12
Traveling system 13
Power system 131
Steering system 132
Braking system 133

FIG. 2

102
101

FIG. 3A

102
101

FIG. 3B

102
101

FIG. 3C

103
102
101

FIG. 3D

103
101
102

FIG. 3E

S10
Determine a game object of an ego vehicle
S20
From a plurality of strategy spaces of the ego vehicle and the game object, perform a plurality of times of release of the strategy spaces, and determine a traveling decision-making result of the ego vehicle
S30
Generate a longitudinal/lateral control amount based on the decision-making result, so that the longitudinal/lateral control amount is executed to implement an expected traveling trajectory of the ego vehicle
S40
Display the decision-making result in a display apparatus
S11
An ego vehicle obtains vehicle's external environment information
S12
The ego vehicle identifies a game object of the ego vehicle from an obstacle


FIG. 4

FIG. 5

S21
Release a strategy space of an ego vehicle and a game object for a first time
S22
Determine a cost value corresponding to each behavior-action pair
S23
Add a behavior-action pair whose cost value is not greater than a cost threshold to a strategy feasible region
S24
Select a decision-making result from the strategy feasible region, and release a strategy space for a second time if the strategy feasible region has no solution
S25
Based on the strategy space released for the second time, determine a strategy feasible region
S26
Select a decision-making result from the strategy feasible region, and release a strategy space for a third time if the strategy feasible region has no solution

FIG. 6

Game object

T1

T2

Expected traveling trajectory of the game object

Expected traveling trajectory of the ego vehicle

Tn

Tn

T2

T1

Ego vehicle

FIG. 7

Cost
1
0
0.2
1.2
m

FIG. 8A

Cost
1
1
0
2
4 m/s3

FIG. 8B

Cost
1
0
Speed0 Speed1 m/s

FIG. 8C

Cost
1
0
1
acc

FIG. 8D

Cost
1.2
1
0.5
−hardMargin −softMargin 0 softMargin hardMargin m

FIG. 8E

Cost
0.8
0.5
0.3
Yielding
Cutting-in
Cutting-in
0
K
K+1

FIG. 8F

S10
Determine a game object and a non-game object of an ego vehicle
S15
Constrain a strategy space of the ego vehicle based on a traveling status of the non-game object
S20
From a plurality of strategy spaces of the ego vehicle and the game object, perform a plurality of times of release of the strategy spaces, and determine a traveling decision-making result of the ego vehicle

FIG. 9

103
102
101

FIG. 10

S110
An ego vehicle obtains vehicle's external environment information via an environment information obtaining apparatus
S120
The ego vehicle determines a game object and a non-game object
S130
S140
S131
Release a longitudinal sampling strategy space of the ego vehicle and a crossing game vehicle
S132
Determine a feasible region of the strategy space
S141
Release a longitudinal sampling strategy space of the ego vehicle and an oncoming game vehicle
S142
Determine a feasible region of the strategy space
S143
Release a strategy space spanned by a lateral sampling dimension and a longitudinal sampling dimension of the ego vehicle and the oncoming game vehicle
S144
Determine a feasible region of the strategy space
S150
Obtain an intersection of the feasible regions in the two strategy spaces and determine a final policy feasible region of the ego vehicle
S160
Select a decision-making result from the final strategy feasible region, and control the ego vehicle to execute a behavior action

FIG. 11

Intelligent driving decision-making apparatus 100
Obtaining module 110
Processing module 120

FIG. 12

S210
Obtain information of an obstacle outside a vehicle
S220
Based on the obstacle information, determine a traveling decision-making result of the vehicle
S230
Control traveling of the vehicle based on the decision-making result

FIG. 13

Vehicle traveling control apparatus 200
Obtaining module 210
Processing module 220

FIG. 14

Vehicle 300
Vehicle traveling control apparatus 200
Traveling system 250

FIG. 15

Computing device 400
410
Processor
430
Communication interface
420
Memory

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2021146922 A1